# EUROPEAN PATENT APPLICATION

(11) **EP 4 637 229 A1**
(43) Date of publication of application: **22.10.2025**
(21) Application number: 23910685.9
(22) Date of filing: 27.12.2023
(51) Int. Cl.: H04W 60/00

(54) **REGISTRATION METHOD AND RELATED DEVICE**

(30) Priority: 31.12.2022 CN 202211734880
(71) Applicant: Huawei Technologies Co., Ltd., Shenzhen, Guangdong 518129 (CN)
(72) Inventor: HU, Xiaodong, Shenzhen, Guangdong 518129 (CN); ZONG, Zaifeng, Shenzhen, Guangdong 518129 (CN); YIN, Yu, Shenzhen, Guangdong 518129 (CN); LI, Guanglei, Shenzhen, Guangdong 518129 (CN)
(74) Representative: Pfenning, Meinig & Partner mbB
(86) International application number: PCT/CN2023/142228
(87) International publication number: WO 2024/140766

(57) **Abstract**

Embodiments of this application provide a registration method and a related device, and relate to the communication field. In the registration method, a terminal sends a sensing registration request to a first network element, where the sensing registration request includes identity information of the terminal, location information of the terminal, and sensing area information of the terminal. The terminal receives a sensing registration response to the sensing registration request, where the sensing registration response is sent by the first network element, and includes a registration result of the terminal. Therefore, in this application, the terminal may request, by initiating the sensing registration request, to register with the first network element, to implement registration of the terminal, so that the first network element can manage the terminal, for example, manage a sensing service of the terminal.

## Description

This application claims priority to Chinese Patent Application No. 202211734880.6, filed with the China National Intellectual Property Administration on December 31, 2022 and entitled "REGISTRATION METHOD AND RELATED DEVICE", which is incorporated herein by reference in its entirety.

### TECHNICAL FIELD

Embodiments of this application relate to the communication field, and in particular, to a registration method and a related device.

### BACKGROUND

A terminal performs communication by using an electromagnetic wave. Sensing means performing detection on environment by using an electromagnetic wave, and receiving an electromagnetic wave echo for sensing. When the electromagnetic wave used for communication has a sense function, the terminal has a sensing capability, and can perform sensing identification on a specific area/object/event and the like. A 5G network may use the sensing capability of the terminal as a new capability for various scenarios and requirements. However, a problem of how the terminal registers with the network has not been resolved.

### SUMMARY

This application provides a registration method and a related device, to implement registration of a terminal, and facilitate management of a sensing service of the terminal.

According to a first aspect, a registration method is provided. The method includes the following steps.

A terminal sends a sensing registration request to a first network element, where the sensing registration request includes identity information of the terminal, location information of the terminal, and sensing area information of the terminal. The terminal receives a sensing registration response to the sensing registration request, where the sensing registration response is sent by the first network element, and includes a registration result of the terminal.

Therefore, in this application, the terminal may request, by initiating the sensing registration request, to register with the first network element, to implement registration of the terminal, so that the first network element can manage the terminal, for example, manage a sensing service of the terminal.

With reference to the first aspect, in some implementations of the first aspect, when the first network element is a sensing network element, the terminal sends the sensing registration request to the first network element via an access and mobility management function network element.

Therefore, in this application, the terminal may send the sensing registration request via a control plane.

With reference to the first aspect, in some implementations of the first aspect, that the terminal sends the sensing registration request to the first network element via the access and mobility management function network element includes: The terminal sends a first message to the access and mobility management function network element, where the first message includes the sensing registration request, so that the access and mobility management function network element determines the first network element and sends the sensing registration request to the first network element.

Therefore, in this application, after the access and mobility management function network element determines the first network element, the access and mobility management function network element forwards the sensing registration request to the first network element.

With reference to the first aspect, in some implementations of the first aspect, before the terminal sends the sensing registration request to the first network element, the registration method further includes: The terminal determines the first network element.

Therefore, in this application, the terminal may first determine the first network element, and then send the sensing registration request to the first network element.

With reference to the first aspect, in some implementations of the first aspect, that the terminal determines the first network element includes:
The terminal determines the first network element based on local network element configuration information, where the network element configuration information indicates the first network element. Alternatively, the terminal sends an address request to a second network element, where the address request is used to request the second network element to determine a user plane address of the first network element. The terminal receives the user plane address of the first network element from the second network element.

Therefore, in this application, the terminal may directly determine the first network element based on the local network element configuration information, or determine the first network element by sending the address request to the second network element.

With reference to the first aspect, in some implementations of the first aspect, the address request is sent via a protocol data unit PDU session establishment request.

With reference to the first aspect, in some implementations of the first aspect, before the terminal sends the sensing registration request to the first network element, the registration method further includes:
The terminal sends a terminal registration request to the access and mobility management function network element, where the terminal registration request includes a sensing capability support indication, and the sensing capability support indication indicates that the terminal is configured to perform sensing, so that the access and mobility management function network element performs authentication and/or authorization on the terminal based on the sensing capability support indication. The terminal receives a terminal registration response from the access and mobility management function network element, where the terminal registration response includes an authentication result of the terminal and/or an authorization result of the terminal.

Therefore, in this application, before the terminal sends the sensing registration request to the first network element, the terminal needs to first register with the network, so that the access and mobility management function network element learns that the terminal supports sensing.

With reference to the first aspect, in some implementations of the first aspect, that the terminal sends the sensing registration request to the first network element via the access and mobility management function network element includes:
The terminal sends a terminal registration request to the access and mobility management function network element, where the terminal registration request includes a sensing capability support indication and the sensing registration request, and the sensing capability support indication indicates that the terminal is configured to perform sensing, so that the access and mobility management function network element performs authentication and/or authorization on the terminal based on the sensing capability support indication and sends the sensing registration request to the first network element.

Therefore, in this application, the terminal registration request is reused to send the sensing registration request to the access and mobility function network element, so that the access and mobility management function network element performs authentication and/or authorization on the terminal and sends the sensing registration request to the first network element. A terminal registration request procedure is reused, so that communication overheads of the terminal can be reduced.

With reference to the first aspect, in some implementations of the first aspect, when the first network element is an access and mobility management function network element, that the terminal sends the sensing registration request to the first network element includes:
The terminal sends a terminal registration request to the access and mobility management function network element, where the terminal registration request includes a sensing capability support indication and the sensing registration request, and the sensing capability support indication indicates that the terminal is configured to perform sensing, so that the access and mobility management function network element performs authentication and/or authorization on the terminal based on the sensing capability support indication and obtains the sensing registration response in response to the sensing registration request.

Therefore, in this application, the terminal registration request is reused to send the sensing registration request to the access and mobility function network element, so that the access and mobility management function network element performs authentication and/or authorization on the terminal and obtains the sensing registration response in response to the sensing registration request. A terminal registration request procedure is reused, so that communication overheads of the terminal can be reduced.

With reference to the first aspect, in some implementations of the first aspect, the registration method further includes:
The terminal receives a sensing data request from a sensing demander, where the sensing demander includes at least one of the following: the first network element, an application service function network element, or a terminal device. The terminal obtains sensing data based on the sensing data request. The terminal provides the sensing data for the sensing demander.

Therefore, in this application, the terminal may perform sensing in response to the sensing data request from the sensing demander, to obtain the sensing data, and provide the sensing data for the sensing demander.

With reference to the first aspect, in some implementations of the first aspect, the sensing registration request further includes at least one of the following: sensing quality information of the terminal, a sensing type additionally supported by the terminal, and a channel model parameter of the terminal.

According to a second aspect, this application further provides a registration method. The method includes the following steps.

A first network element receives a sensing registration request sent by a terminal, where the sensing registration request includes identity information of the terminal, location information of the terminal, and sensing area information of the terminal. The first network element sends a sensing registration response to the sensing registration request to the terminal, where the sensing registration response includes a registration result of the terminal.

Therefore, in this application, the terminal may request, by initiating the sensing registration request, to register with the first network element, to implement registration of the terminal, so that the first network element can manage the terminal, for example, manage a sensing service of the terminal.

With reference to the second aspect, in some implementations of the second aspect, when the first network element is a sensing network element, the first network element receives the sensing registration request sent by the terminal via an access and mobility management function network element.

With reference to the second aspect, in some implementations of the second aspect, the sensing registration request is sent by the terminal to the access and mobility management function network element via a first message.

With reference to the second aspect, in some implementations of the second aspect, when the first network element is an access and mobility management function network element, that the first network element receives the sensing registration request sent by the terminal includes:
The access and mobility management function network element receives a terminal registration request sent by the terminal, where the terminal registration request includes a sensing capability support indication and the sensing registration request, and the sensing capability support indication indicates that the terminal is configured to perform sensing. The access and mobility management function network element performs authentication and/or authorization on the terminal based on the sensing capability support indication. The access and mobility management function network element obtains the sensing registration response in response to the sensing registration request.

Therefore, in this application, a terminal registration request procedure is reused, so that the terminal sends the sensing registration request to the access and mobility function network element. In this way, the access and mobility management function network element may perform authentication and/or authorization on the terminal and obtain the sensing registration response in response to the sensing registration request. The terminal registration request procedure is reused, so that communication overheads of the terminal can be reduced.

With reference to the second aspect, in some implementations of the second aspect, the registration method further includes: The first network element sends a sensing data request to the terminal, so that the terminal performs sensing in response to the sensing data request to obtain sensing data. The first network element receives the sensing data from the terminal.

With reference to the second aspect, in some implementations of the second aspect, the sensing data request is obtained by the first network element from a third network element, an application service function network element, or a terminal device.

With reference to the second aspect, in some implementations of the second aspect, the registration method further includes:
The first network element sends a sensing update request to a fourth network element, where the sensing update request is used to request the fourth network element to update sensing capability information of the first network element. The first network element receives a sensing update response sent by the fourth network element.

Therefore, in this application, after the terminal registers with the first network element, the first network element may update the sensing capability information of the first network element to the fourth network element, namely, sensing capability information of the newly registered terminal in this case.

With reference to the second aspect, in some implementations of the second aspect, the registration method further includes: The first network element performs authentication and/or authorization on the terminal.

With reference to the second aspect, in some implementations of the second aspect, that the first network element performs authentication and/or authorization on the terminal includes: The first network element locally performs authentication and/or authorization on the terminal. Alternatively, the first network element performs authentication and/or authorization on the terminal via a fifth network element.

With reference to the second aspect, in some implementations of the second aspect, the sensing registration request further includes at least one of the following: sensing quality information of the terminal, a sensing type additionally supported by the terminal, and a channel model parameter of the terminal.

According to a third aspect, this application further provides a registration apparatus, including a unit configured to perform the method according to the first aspect.

According to a fourth aspect, this application further provides a registration apparatus, including a unit configured to perform the method according to the second aspect.

According to a fifth aspect, this application further provides a communication apparatus, including a processor. The processor is coupled to a memory, the memory is configured to store a computer program or instructions, and the processor is configured to execute the computer program or the instructions, so that the communication apparatus performs the method according to the first aspect or the second aspect.

According to a sixth aspect, this application further provides a computer-readable storage medium, including a computer program. When the computer program is run on a computer, the computer is caused to perform the method according to the first aspect or the second aspect.

According to a seventh aspect, this application further provides a computer program product. When the computer program product runs on a computer, the computer is caused to perform the method according to the first aspect or the second aspect.

According to an eighth aspect, this application further provides a chip system, including a processor, configured to invoke a computer program from a memory and run the computer program, so that a communication device on which the chip system is mounted performs the method according to the first aspect or the second aspect.

Optionally, in an implementation, the chip system may further include a memory, and the memory stores the computer program.

According to a ninth aspect, this application further provides a registration system, including the apparatus according to the third aspect and the apparatus according to the fourth aspect.

### BRIEF DESCRIPTION OF DRAWINGS

The following describes the accompanying drawings used in embodiments of this application.
FIG. 1 is a diagram of a network architecture applicable to a registration method according to an embodiment of this application;
FIG. 2 is a diagram of a network architecture according to an embodiment of this application;
FIG. 3 is a schematic flowchart of a registration method according to an embodiment of this application;
FIG. 4 is a schematic flowchart of another registration method according to an embodiment of this application;
FIG. 5A is a specific schematic flowchart of a registration method according to an embodiment of this application;
FIG. 5B is a specific schematic flowchart of another registration method according to an embodiment of this application;
FIG. 5C is a specific schematic flowchart of another registration method according to an embodiment of this application;
FIG. 5D is a specific schematic flowchart of another registration method according to an embodiment of this application;
FIG. 5E is a specific schematic flowchart of another registration method according to an embodiment of this application;
FIG. 6 is a schematic flowchart of an information update according to an embodiment of this application;
FIG. 7A is a schematic flowchart of a sensing service according to an embodiment of this application;
FIG. 7B is a schematic flowchart in which a terminal having a sensing requirement requests a sensing service according to an embodiment of this application;
FIG. 7C is another schematic flowchart in which a terminal having a sensing requirement requests a sensing service according to an embodiment of this application;
FIG. 7D is a schematic flowchart in which an AF requests a sensing service according to an embodiment of this application;
FIG. 7E is another schematic flowchart in which an AF requests a sensing service according to an embodiment of this application;
FIG. 8 is a diagram of a structure of a registration apparatus according to an embodiment of this application;
FIG. 9 is a diagram of a structure of another registration apparatus according to an embodiment of this application; and
FIG. 10 is a diagram of a structure of a communication apparatus according to an embodiment of this application.

### DESCRIPTION OF EMBODIMENTS

The following describes the technical solutions of this application with reference to the accompanying drawings.

Embodiments of this application relate to an application. Therefore, for ease of understanding, the following first describes related concepts such as related terms in embodiments of this application.

In embodiments of this application, the term like "example" or "for example" is used to represent giving an example, an illustration, or a description. Any embodiment or design scheme described as "example" or "for example" in this application should not be explained as being more preferred or having more advantages than another embodiment or design scheme. Exactly, use of the word like "example" or "for example" is intended to present a related concept in a specific manner.

In embodiments of this application, "at least one" means one or more, and "a plurality of" means two or more. "At least one of the following items (pieces)" or an expression similar thereto means any combination of these items, including a singular item (piece) or any combination of plural items (pieces). For example, at least one of a, b, or c may represent: a, b, c, (a and b), (a and c), (b and c), or (a, b, and c), where a, b, and c may be singular or plural. "And/or" describes an association relationship between associated objects, and represents that three relationships may exist. For example, A and/or B may represent the following three cases: Only A exists, both A and B exist, and only B exists, where A and B may be singular or plural. The character "/" generally represents an "or" relationship between the associated objects. Sequence numbers of steps (for example, step S1 and step S21) in embodiments of this application are merely used to distinguish between different steps, and do not limit an execution sequence of the steps.

In addition, unless otherwise stated, ordinal numbers such as "first" and "second" in embodiments of this application are for differentiation between a plurality of objects, but are not intended to limit an order, a time sequence, priorities, or importance of the plurality of obj ects. For example, a first device and a second device are merely for ease of description, and do not represent a difference in a structure, importance, and the like of the first device and the second device. In some embodiments, the first device and the second device may alternatively be a same device.

According to the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

A method in embodiments of this application may be applied to a long term evolution (long term evolution, LTE) technology system, a long term evolution-advanced (long term evolution-advanced, LTE-A) technology system, an enhanced long term evolution (enhanced long term evolution-advanced, eLTE) technology system, a 5th generation (the 5th Generation, 5G) mobile communication system new radio (New Radio, NR) system, or a future communication network like a 6th generation (the 6th Generation, 6G) mobile communication system, or may also be extended to similar wireless communication systems such as cellular systems related to wireless fidelity (wireless fidelity, Wi-Fi), worldwide interoperability for microwave access (worldwide interoperability for microwave access, WiMAX), and 3rd generation partnership project (3rd generation partnership project, 3GPP).

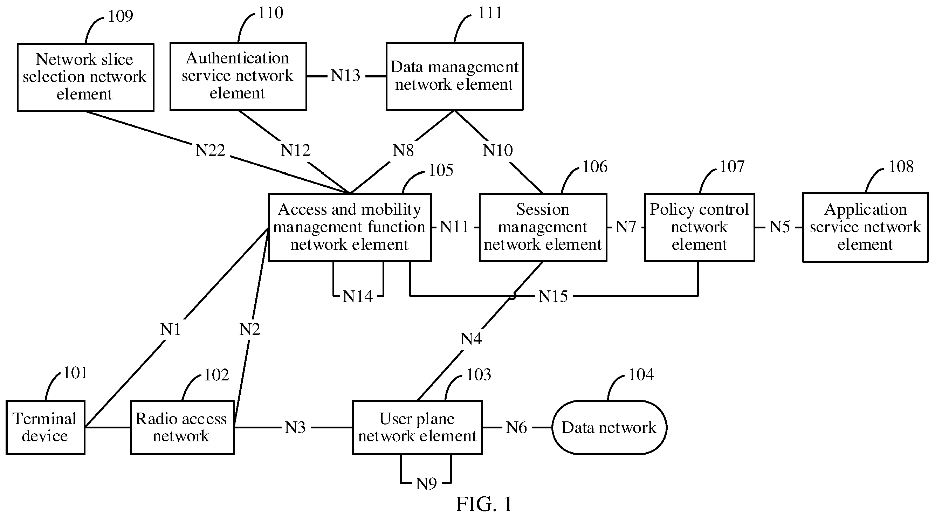

For example, a system architecture of a 5G network may be shown in FIG. 1.

FIG. 1 shows a network architecture applied to an embodiment of this application. Network elements that may be used in the network architecture are separately described.
1. Terminal device 101: The terminal device 101 is referred to as a terminal for short, and is also referred to as a user equipment (user equipment, UE). The terminal device 101 may include various handheld devices, vehicle-mounted devices, wearable devices, and computing devices that have a wireless communication function or other processing devices connected to a wireless modem, and terminals in various forms such as a mobile station (mobile station, MS), a terminal (terminal), a soft terminal, an access terminal, a terminal device unit (subscriber unit), a terminal device station, a mobile station (mobile station, MS), a remote station, a remote terminal, a mobile device, a terminal device agent, a terminal device apparatus, and the like. For example, the terminal device 101 may be a water meter, an electricity meter, or a sensor.

In this application, the terminal device may further have a sensing capability. For example, a radio frequency module of the terminal device may send a radio frequency signal, and then learn of an environment by receiving and processing a reflected signal. Therefore, in this application, the terminal device may perform detection and/or collection of sensing data.

For example, the terminal device 101 may alternatively be a relay terminal (relay UE), a remote terminal (remote UE), a reference terminal (reference UE), an integrated access and backhaul (integrated access and backhaul, IAB) node, or an RN (relay node). The IAB node may access a RAN in a wired or wireless manner, and may share a 3GPP signal, so that another terminal can access a 3GPP system via the IAB node. In other words, the IAB node supports wireless relay of access traffic on an NR air interface (referred to as an air interface for short) through an NR air interface backhaul link. For example, a form of the IAB node may be a sensing communication satellite.

When a sensing capability is integrated into a communication frequency band, a wireless communication system may perform sensing identification on a specific area, object, or event, to meet sensing requirements in many scenarios in combination with another sensor. For example, after a specific type of terminal device having a sensing capability is deployed in a specific area, sensing may be performed on the specific area.

The following describes some examples of application scenarios having sensing requirements in the communication field.

### (1) Autonomous driving:

### Scenario 1 (V2X, UAV, and MAV):

The V2X represents vehicle-to-everything (vehicle-to-everything), the UAV represents an unmanned aerial vehicle (unmanned aerial vehicle), and the MAV represents a manned aerial vehicle (manned aerial vehicle).

Because a sensing distance of a vehicle, an unmanned aerial vehicle, or a manned aerial vehicle is short or a non-line-of-sight (non-line-of-sight, NLOS) path cannot be sensed, a dynamic map may be generated based on sensing.

### Scenario 2 (V2X, UAV, and MAV):

During a travelling process of a vehicle, an unmanned aerial vehicle, or a manned aerial vehicle, if a dangerous event like sudden appearance of a person or an object occurs, the dangerous event may be identified based on sensing and a UE may be notified of performing an emergency operation.

### Scenario 3 (V2X, UAV, and MAV):

If a vehicle, an unmanned aerial vehicle, or a manned aerial vehicle is assisted by autonomous driving, a customized dynamic high definition map is generated based on sensing to assist a UE in autonomous driving.

### (2) Security supervision:

### Scenario 1 (V2X, UAV, and MAV):

If driving violation occurs, for example, a vehicle occupies an emergency lane, or an unmanned aerial vehicle or a manned aerial vehicle leaves a route, the vehicle violation may be identified based on sensing and real-time alarming or post-event punishment may be performed.

Scenario 2 (national railway perimeter, UAV, and MAV): If a foreign object enters into a railway track, or an unmanned aerial vehicle or a manned aerial vehicle enters into a no-fly zone (for example, an airport), the violation object may be identified and tracked based on sensing and real-time emergency handling may be performed.

### (3) Family health:

Scenario 1: In detection of an abnormal posture like falling down of a person, the abnormal posture may be identified based on sensing and an alert may be generated.

Scenario 2: In detection of health such as human breath/heartbeat, an abnormal indicator may be identified based on sensing and an alert may be generated.

(4) Meteorological monitoring: Sensing and prediction are performed on changes of environment, climate, and weather.

2. Radio access network (radio access network, RAN) 102: The radio access network 102 is a network including a plurality of RAN nodes, and can implement a radio physical layer function, resource scheduling and radio resource management, radio access control, and a mobility management function. The RAN 102 is connected to a user plane network element 103 through a user plane interface N3, and is configured to transfer data of a terminal device. The RAN 102 establishes a control plane signaling connection to an access and mobility management function network element 105 through a control plane interface N2, to implement a function like radio access bearer control.

Specifically, the RAN 102 may be configured to provide a network access function for an authorized terminal device in a specific area, and can use transmission tunnels of different quality based on a level of the terminal device, a service requirement, and the like.

The RAN 102 can manage a radio resource, provide an access service for the terminal device, and further complete forwarding of a control signal and the data of the terminal device between the terminal device and a core network.

The radio access network is interchangeable with access network device or access network (access network, AN). The access network device may be a base station, a further evolved NodeB (gNB), an evolved NodeB (evolved NodeB, eNB), a transmission reception point (transmission reception point, TRP), a central unit (central unit, CU) node, a distributed unit (distributed unit, DU) node, a transmission point (transmission point, TP), a receiving point (receiving point, RP), a sensing communication satellite, and the like. This is not limited. In this application, the radio access network is described by using a base station as an example, and a function performed by the base station is also applicable to another interchangeable expression of the radio access network.

3. Access and mobility management function network element 105: The access and mobility management function network element 105 is mainly used for mobility management, access management, and the like, and may be configured to implement other functions except session management in functions of a mobility management entity (mobility management entity, MME), for example, lawful interception, access authorization/authentication, and the like.

In a 5G communication system, the access and mobility management function network element may be an access and mobility management function (access and mobility management function, AMF) network element. In a future communication system, the access and mobility management function network element may still be an AMF network element, or may have another name. This is not limited in this application.

The AMF is mainly responsible for functions such as UE authentication, UE mobility management, network slice selection, and session management network element selection; serves as an anchor point for N1 and N2 signaling connections and provides routes for N1/N2 session management (session management, SM) messages for a session management network element; and maintains and manages UE status information.

4. Session management network element 106: The session management network element 106 is mainly configured for session management, terminal device internet protocol (internet protocol, IP) address allocation and management, selection and control of a user plane function, termination of interfaces towards policy control and charging functions, downlink data notification, and the like.

In a 5G communication system, the session management network element may be a session management function (session management function, SMF) network element. In a future communication system, the session management network element may still be an SMF network element, or may have another name. This is not limited in this application.

The SMF is mainly responsible for all control plane functions of UE session management, including user plane network element selection, IP address allocation, session QoS management, obtaining of policy and charging control (policy and charging control, PCC) information (from a policy control network element), and the like.

5. User plane network element 103: The user plane network element 103 is used for packet routing and forwarding, quality of service (quality of service, QoS) handling for user plane data, and the like.

In a 5G communication system, the user plane network element may be a user plane function (user plane function, UPF) network element. In a future communication system, the user plane network element may still be a UPF network element, or may have another name. This is not limited in this application.

The UPF mainly provides a service processing function of a user plane. As an anchor point of a protocol data unit (protocol data unit, PDU) session connection, the UPF is responsible for data packet filtering, service routing, packet forwarding, an anchoring function, and rate control of a user equipment, charging information generation, QoS mapping and enforcement, uplink identifier identification and routing to a data network, downlink packet buffering and notification triggering of downlink data arrival, connection to an external data network, and the like.

6. Data management network element 111: The data management network element 111 is used for terminal device identification handling, access authentication, registration and mobility management, and the like.

In a 5G communication system, the data management network element may be a unified data management (unified data management, UDM) network element. In a future communication system, the data management network element may still be a UDM network element, or may have another name. This is not limited in this application.

The UDM network element is mainly used for user data management and control, for example, subscription information management, including obtaining subscription information from a data repository and providing the subscription information for another network element (for example, an AMF); generation of 3GPP authentication credentials for a UE; and registration and maintenance of a network element that currently serves the UE (for example, an AMF represented by an AMF ID 1 is a current serving AMF of the UE).

7. Data repository: The data repository is configured to store user data.

In a 5G communication system, the data repository may be a unified data repository (Unified Data Repository, UDR). In a future communication system, the data repository may still be a UDR, or may have another name. This is not limited in this application.

The UDR is mainly configured to store user data, including subscription data invoked by a data management network element 111, policy information invoked by a policy control network element 107, structured data used for capability exposure, and application data invoked by a network capability exposure function (network exposure function, NEF) network element.

8. Network capability exposure network element: The network capability exposure network element is used for connection and interaction between another internal network element of a core network and an external application server of the core network, to provide network capability information for the external application server, or provide information from the external application server for the core network element.

In a 5G communication system, the network capability exposure network element may be an NEF network element. In a future communication system, the network capability exposure network element may still be an NEF, or may have another name. This is not limited in this application.

9. Application service network element 108: The application service network element 108 interacts with a core network element to provide some services, for example, interacts with a policy control network element 107 to perform service policy control, interacts with a network capability exposure network element to obtain some network capability information or provide some application information for a network, and provides some data network access point information for the policy control network element 107 to generate routing information of a corresponding data service.

In a 5G communication system, the application service network element may be an application service function (Application Function, AF) network element. In a future communication system, the application service network element may still be an AF network element, or may have another name. This is not limited in this application. For example, the application service network element is interchangeable with any one of the following: an application server (application server, AS), an AF, a third party, a third-party application, a sensing application, a sensing client, an application (application, APP), an over the top (over the top, OTT) application, and the like. OTT represents providing various application services for a user via the internet. The OTT application is an upper-layer application on a bearer network, for example, WeChat, Alipay, or Youku.

10. Authentication service network element 110: The authentication service network element 110 is configured to perform security authentication on a UE when the UE accesses a network.

In a 5G communication system, the authentication service network element may be an authentication server function (authentication server function, AUSF) network element. In a future communication system, the authentication service network element may still be an AUSF network element, or may have another name. This is not limited in this application.

The 5G communication system is used as an example. For example, the AUSF receives a request of an AMF for performing identity authentication on the UE, requests a key from a UDM, and then forwards, to the AMF, the key delivered by the UDM for authentication processing.

11. Network slice selection network element 109: The network slice selection network element 109 is configured to select a set of slice instances for a UE, and determine an AMF set and allowed NSSAI for the UE (the NSSAI is short for network slice selection assistance information, namely, network slice selection auxiliary information/network slice selection assistance information, where a network slice is uniquely identified by a single piece of S-NSSAI, and a set of one or more pieces of S-NSSAI is referred to as NSSAI).

In a 5G communication system, the network slice selection network element may be a network slice selection function (network slice selection function, NSSF) network element. In a future communication system, the network slice selection network element may still be an NSSF network element, or may have another name. This is not limited in this application.

12. Policy control network element 107: The policy control network element 107 is used for a unified policy framework to govern network behavior, providing configuration policy information for a UE, providing policy rule information for a control plane function network element (for example, an AMF or an SMF network element), and the like.

In a 5G communication system, the policy control network element may be a policy control function (policy control function, PCF) network element. In a future communication system, the policy control network element may still be a PCF network element, or may have another name. This is not limited in this application.

13. Data network 104: The data network 104 is configured to provide a network for data transmission.

In a 5G communication system, the data network may be a data network (data network, DN). In a future communication system, the data network may still be a DN, or may have another name. This is not limited in this application.

It should be noted that the foregoing "network element" may also be referred to as an entity, a device, an apparatus, a module, or the like. This is not particularly limited in this application. In addition, in this application, for ease of understanding and description, descriptions of "network element" are omitted in some descriptions. For example, the AMF network element is referred to as an AMF for short. In this case, the "AMF" should be understood as an AMF network element or an AMF entity. Descriptions of same or similar cases are omitted below.

The network architecture may further include a location management service (location management service, LMF) network element, which may initiate a positioning procedure of the terminal device to obtain location information of the terminal device.

In this application, the network architecture may further include a sense function (sense function, SF) network element, which is referred to as a sensing network element for short. The sensing network element is responsible for an end-to-end enabling sensing service. For example, the sensing network element obtains a sensing requirement based on an internal requirement of the network or a requirement of a demander of the sensing service. After obtaining the sensing requirement, the sensing network element triggers the terminal device and the like to perform detection and/or collection of the sensing data.

It should be noted that, in a 5G network, the sensing network element may be one of network elements of the 5G core (5G core, 5GC) network. Alternatively, the sensing network element may be a non-core network element. Alternatively, the sensing network element may be independently deployed, or may be a sub-network element or a module in a network element of the 5G core network. For example, the sensing network element may be deployed together with the AMF network element or the LMF network element. For another example, the sensing network element may alternatively be deployed together with the access network device. Alternatively, the sensing network element may be deployed together with the AMF and the access network device. This is not particularly limited in this application.

In FIG. 1, N1, N2, N3, N4, N6, and the like are interface sequence numbers. Names and functions of interfaces between network elements are as follows:
(1) N1: N1 is an interface between the AMF and the terminal device, and may be configured to transfer a QoS control rule and the like to the terminal device.
(2) N2: N2 is an interface between the AMF and the RAN, and may be configured to transfer radio bearer control information or the like from a core network side to the RAN.
(3) N3: N3 is an interface between the RAN and the UPF, and is mainly configured to transfer uplink and downlink user plane data between the RAN and the UPF.
(4) N4: N4 is an interface between the SMF and the UPF, and may be configured to transfer information between a control plane and a user plane, including delivering a forwarding rule, a QoS control rule, a traffic statistical rule, or the like from the control plane to the user plane, and reporting information about the user plane.
(5) N5: N5 is an interface between the AF and the PCF, and may be configured to deliver an application service request and report a network event.
(6) N6: N6 is an interface between the UPF and the DN, and is configured to transfer uplink and downlink user data flows between the UPF and the DN.
(7) N7: N7 is an interface between the PCF and the SMF, and may be configured to deliver control policies at a protocol data unit (protocol data unit, PDU) session granularity and a service data flow granularity.
(8) N8: N8 is an interface between the AMF and the UDM, and may be used by the AMF to obtain, from the UDM, access and mobility management-related subscription data and authentication data, used by the AMF to register current mobility management-related information of the terminal with the UDM, and the like.
(9) N9: N9 is a user plane interface between UPFs, and is configured to transfer uplink and downlink user data flows between the UPFs.
(10) N10: N10 is an interface between the SMF and the UDM, and may be used by the SMF to obtain, from the UDM, session management-related subscription data, used by the SMF to register current session-related information of the terminal with the UDM, and the like.
(11) N11: N11 is an interface between the SMF and the AMF, and may be configured to transfer PDU session tunnel information between the RAN and the UPF, transfer a control message sent to the terminal, transfer radio resource control information sent to the RAN, and the like.
(12) N12: N12 is an interface between the AMF and the AUSF, and may be used by the AMF to initiate an authentication procedure to the AUSF, where an SUCI may be carried as a subscription identifier.
(13) N13: N13 is an interface between the UDM and the AUSF, and may be used by the AUSF to obtain a user authentication vector from the UDM, to perform an authentication procedure.
(14) N14: N14 is an interface between AMFs.
(15) N22: N22 is an interface between the AMF and the NSSF.

It should be understood that the foregoing network architecture applied to this embodiment of this application is merely an example of a network architecture described from the perspective of a service architecture, and a network architecture applicable to embodiments of this application is not limited thereto. Any network architecture that can implement functions of the foregoing network elements is applicable to embodiments of this application.

For example, in some network architectures, network function entities such as an AMF, an SMF, a PCF, a GMF, and a UDM are all referred to as network function (Network Function, NF) network elements. Alternatively, in some other network architectures, a set of network elements such as an AMF, an SMF, a PCF, a GMF, and a UDM may all be referred to as control plane function (Control Plane Function, CPF) network elements.

In this application, the proposed sensing network element may communicate with another network element. For example, the sensing network element may communicate with network elements such as a RAN network element, an AMF network element, an SMF network element, and an LMF network element.

The following uses network elements in a 5G system as an example to describe specific details of a solution. It may be understood that, when the solution is used in an LTE system or a future communication system, each network element in the solution may be replaced with another network element having a corresponding function. This is not limited in this application.

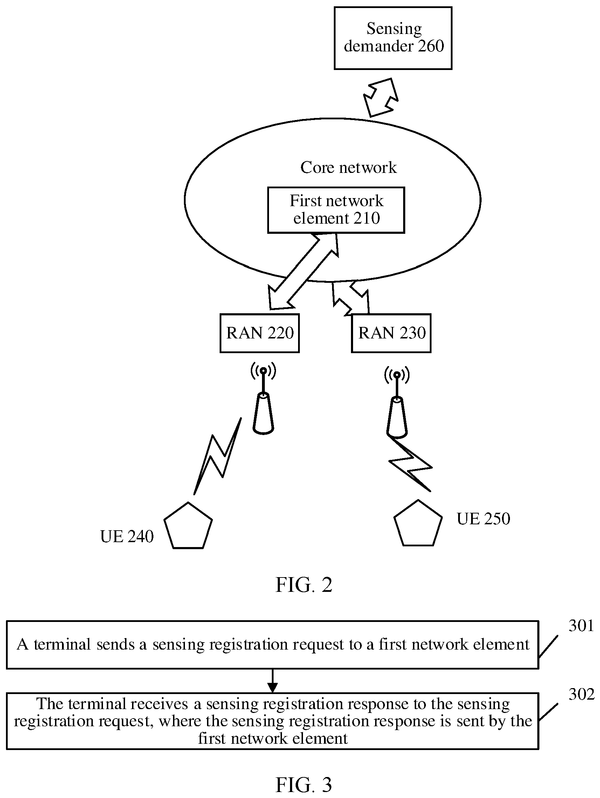

FIG. 2 shows a network architecture to which an embodiment of this application is applicable. The network architecture includes a first network element and at least one RAN. For example, the network architecture further includes at least one UE, and the UE has a sensing capability. For example, the first network element 210, a RAN 220, a RAN 230, a UE 240, and a UE 250 are shown in FIG. 2.

In this application, the UE 240 or the UE 250 may register with the first network element 210 via the RAN 220 or the RAN 230, so that the first network element 210 can manage the UE 240 or the UE 250. When receiving a sensing data request from a sensing demander 260 (for example, a UE or an AF having a sensing requirement), the first network element 210 may trigger, based on the sensing data request, a corresponding UE to perform sensing, to obtain sensing data, and then provide the sensing data for the sensing demander 260.

It should be understood that FIG. 1 and FIG. 2 are merely example network architectures, and a network architecture applicable to embodiments of this application is not limited thereto. Any network architecture that can implement functions of the foregoing network elements is applicable to embodiments of this application.

FIG. 3 is a schematic flowchart of a registration method 300 according to an embodiment of this application. The registration method 300 includes the following steps.

301: A terminal sends a sensing registration request to a first network element.

The sensing registration request includes identity (identity document, ID) information of the terminal, location information of the terminal, and sensing area information of the terminal. Optionally, the sensing registration request may further include at least one of the following: sensing quality information of the terminal, a sensing type additionally supported by the terminal, and a channel model parameter of the terminal.

Specifically, in this embodiment, the terminal is a terminal having a sensing capability. The first network element stores various information carried in the sensing registration request, to subsequently manage the terminal. For example, the first network element may be a sensing network element or an AMF, or the first network element may be another network element, provided that a function the same as or similar to that of the sensing network element or the AMF can be implemented.

For example, a specific form of the sensing registration request may be a request message, a notification message, or the like. This is not particularly limited, provided that the specific form is a message used to initiate the sensing registration request.

302: The terminal receives a sensing registration response to the sensing registration request, where the sensing registration response is sent by the first network element.

The sensing registration response includes a registration result of the terminal.

For example, the registration result may be indicated by registration result indication information, sensing configuration information, and/or the like.

The registration result indication information may include registration success indication information (for example, "1" or "sensing supported") or registration failure indication information (for example, "0", "sensing unsupported", or a specific failure cause). When the registration success indication information is received, it indicates that the terminal performs registration successfully. When the registration failure indication information is received, it indicates that the terminal fails to perform registration. However, the sensing configuration information is delivered only when registration succeeds. Therefore, when the sensing configuration information is received, it indicates that registration succeeds; otherwise, it indicates that registration fails. The sensing configuration information includes at least one of the following information: identity information of the terminal, a sensing type of the terminal, and sensing frequency band indication information of the terminal. Other information that is similar to the sensing configuration information and that can be used to convey the registration result also falls within the protection scope of this application. This is not particularly limited.

The sensing frequency band indication information may indicate a specific frequency band, or indicate ID information corresponding to the specific frequency band. The ID information may include at least one of a digit, a letter, a special character, and the like. For example, for different network operators, same ID information may be used to represent different sensing frequency bands.

In addition, optionally, the sensing registration response may further include the sensing type of the terminal, that is, a sensing type authorized to the terminal. In an example, the first network element determines the sensing type of the terminal based on the ID information of the terminal and local configuration information. Local configuration information is sensing type configuration information of different terminals. The local configuration information may be used to distinguish between different terminals based on ID information of the terminals, and to determine sensing types for the terminals. In another example, the first network element obtains the sensing type of the terminal from a fifth network element based on the ID information of the terminal. The fifth network element stores subscription data of different terminals, and the subscription data includes sensing types authorized to the different terminals. In this embodiment, the fifth network element may be a UDM.

In this solution, the terminal may request, by initiating the sensing registration request, to register with the first network element, to implement registration of the terminal having the sensing capability, so that the first network element can manage the sensing capability of the terminal. In addition, the terminal in this embodiment of this application may be flexibly deployed based on a service requirement, so that a plurality of terminals can adapt to a same sensing algorithm.

For example, the ID information of the terminal is an ID that can uniquely identify a user of the terminal or identify a terminal device. For example, the ID information of the terminal may include any one of the following: subscription permanent identifier (subscription permanent identifier, SUPI) information, a permanent equipment identifier (permanent equipment identifier, PEI), an international mobile equipment identity (international mobile equipment identity, IMEI), a subscription concealed identifier (subscription concealed identifier, SUCI), a mobile subscriber international number (mobile subscriber international ISDN number, MSISDN), a generic public subscription identifier (generic public subscription identifier, GPSI), and international mobile subscriber identity (international mobile subscriber identity, IMSI) information.

An SUPI is a terminal identifier in a 5G communication system. The SUCI may be obtained by encrypting the SUPI. An IMSI is a terminal identifier in a 3G/4G communication system. For example, the identity information of the terminal may alternatively be other identification information that can uniquely identify the terminal, provided that the first network element or a device (for example, the UDM) that performs authentication and/or authorization last can perform authentication and/or authorization on the terminal based on the identity information.

The location information of the terminal may be absolute location information (for example, longitude and latitude coordinates) of the terminal, or may be relative location information of the terminal, for example, location information of the terminal relative to a service scenario. In addition, the location information of the terminal is interchangeable with a terminal location, location-related information of the terminal, terminal location-related information, and the like.

The sensing area information of the terminal is information about an area range that can be detected by the terminal, and may be information such as a relative location and a relative angle of the terminal, or information such as an absolute location and an angle. For example, a sensing area of the terminal is a range with the location information of the terminal as a center and with a radius of five meters or 10 meters. In addition, the sensing area information of the terminal is interchangeable with terminal sensing area, sensitive area, sensing area, sensing area-related information of the terminal, sensitive area-related information of the terminal, sensing area-related information, terminal sensing area-related information, and the like.

The sensing quality information of the terminal includes at least one of the following: sensing object classification, a range resolution, a velocity resolution, and an angle precision. The sensing object classification indicates a type of an object (for example, an animal or a means of transportation) that can be sensed by the terminal. The means of transportation includes a truck, a car, and the like. The range resolution indicates a minimum range at which two targets are distinguished by the terminal as two targets or one target when the two targets are at a same azimuth angle but at different ranges from the terminal. The velocity resolution indicates a capability of the terminal to distinguish between targets in terms of a radial velocity. The angle precision indicates a minimum angle at which two targets are distinguished by the terminal as two targets or one target when the two targets are at a same range but different azimuth angles.

The sensing type additionally supported by the terminal includes at least one of the following: an infrared sensor, a camera, and a lidar.

The channel model parameter of the terminal includes at least one of the following: an amplitude, a spatial three-dimensional coordinate system, an angle of arrival, an angle of incidence, an angle of emission, and a Doppler delay.

In a possible instance, before the terminal sends the sensing registration request to the first network element, the registration method further includes:
The terminal sends a terminal registration request to an AMF network element, where the terminal registration request includes a sensing capability support indication, and the sensing capability support indication indicates that the terminal is configured to perform sensing, so that the AMF network element performs authentication and/or authorization on the terminal based on the sensing capability support indication.

The terminal receives a terminal registration response from the AMF network element, where the terminal registration response includes an authentication result of the terminal and/or an authorization result of the terminal.

In this embodiment, before the terminal sends the sensing registration request to the first network element, the terminal needs to first register with a network, so that the AMF learns that the terminal supports sensing. In other words, in this embodiment of this application, the terminal may first notify the network of the sensing capability of the terminal via the sensing capability support indication, and then send the sensing registration request to the network to request to perform sensing registration.

The sensing capability support indication may be specific indication information, or may be another message that can indicate that sensing is supported, for example, a first request message or a second request message. The first request message is used to request a sensing-related configuration, and the second request message is used to request a network side to allocate an authorized sensing frequency band to the terminal.

For example, similar to the sensing registration response, the terminal registration response includes the authentication result of the terminal and/or the authorization result of the terminal. In this case, the authentication result and/or the authorization result may be understood as a registration result of the terminal, and the registration result may be indicated by registration result indication information, sensing configuration information, and/or the like. The sensing configuration information includes at least one of the following information: the identity information of the terminal, the sensing type of the terminal, and the sensing frequency band indication information of the terminal. Other information that is similar to the sensing configuration information and that can be used to convey the registration result also falls within the protection scope of this application. This is not particularly limited.

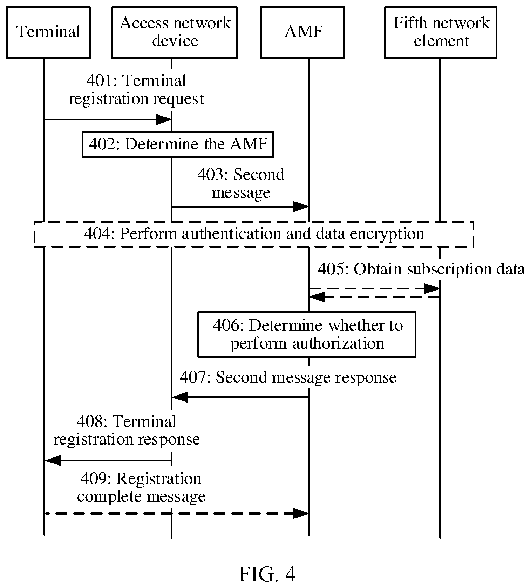

FIG. 4 is a schematic flowchart of another registration method according to an embodiment of this application. FIG. 4 shows a possible implementation in which the foregoing terminal registers with a network. The method includes the following steps.

401: The terminal sends a terminal registration request to an access network device, where the terminal registration request includes a sensing capability support indication, and the sensing capability support indication indicates that the terminal is configured to perform sensing.

Specifically, when sending the terminal registration request to an AMF network element, the terminal may first send the terminal registration request to the access network device, and then the access network device forwards the terminal registration request to the AMF for processing.

402: The access network device determines the AMF.

Specifically, the access network device may select one AMF from a plurality of AMFs as the AMF that processes the terminal registration request of the terminal, and send the terminal registration request of the terminal to the selected AMF.

For example, the access network device may select, from the plurality of AMFs, an AMF with lowest system load as the AMF that processes the terminal registration request of the terminal. Alternatively, the access network device performs AMF selection based on link load between the plurality of AMFs and the access network device, for example, selects an AMF with lowest link load as the AMF that processes the terminal registration request of the terminal.

403: The access network device sends a second message to the AMF.

Specifically, the second message carries the terminal registration request, and the second message may be an N2 message. In addition, with network evolution and development, the second message may alternatively be of another message type. This is not particularly limited.

404: Perform authentication on the terminal and data encryption.

Specifically, a fifth network element and an AUSF perform authentication on the terminal, in other words, determines whether the terminal is a valid user. In addition, the fifth network element and the AUSF further encrypt communication signaling and data between the terminal and a network side. In this embodiment, the fifth network element may be a UDM.

405: The AMF obtains subscription data of the terminal from the fifth network element.

Specifically, the subscription data includes indication information (namely, sensing permission indication information, indicating whether sensing is authorized) indicating whether to authorize the terminal to perform sensing and a specific sensing type that is subscribed to, to authorize the terminal. In addition, the subscription data may further include indication information of a sensing frequency band that is allowed to be used by the terminal.

One of step 404 and step 405 may be selected and performed. When step 405 is performed, step 406 needs to be performed. Alternatively, both step 404 and step 405 may be performed.

406: After obtaining the subscription data in step 405, the AMF determines whether to perform authorization. For example, the AMF may perform matching directly based on the subscription data and the sensing capability support indication that is carried in the terminal registration request, to determine whether to authorize the terminal. When the subscription data includes the sensing permission indication information, the terminal may be authorized to perform sensing. For another example, the AMF may determine, based on local authorization configuration information of the terminal, whether to authorize the terminal to perform sensing. To be specific, the AMF determines, based on the local authorization configuration information, authorization data, and a sensing capability supported by the terminal, whether to authorize the terminal. For example, when the authorization data includes the sensing permission indication information, but authorizing the sensing capability of the terminal is not configured in the local authorization configuration information, it may be determined not to authorize the terminal to perform sensing. For another example, when the authorization data does not include the sensing permission indication information, but authorizing the sensing capability of the terminal is configured in the local authorization configuration information, it may be determined to authorize the terminal to perform sensing.

407: The AMF sends a second message response to the access network device. The second message response includes registration accept indication information. Further, the second message response may further include the sensing permission indication information. The second message response may further include the sensing type subscribed to by the terminal.

For example, a specific form of the second message response may alternatively be a second message. In addition, with network evolution and development, the second message response may alternatively be of another message type. This is not particularly limited.

408: The access network device sends a terminal registration response to the terminal.

Specifically, an example in which the terminal registration response includes the registration accept indication information and the sensing permission indication information is used. When the registration accept indication information and the sensing permission indication information are received, it indicates that the terminal performs registration successfully. For example, the terminal registration response may alternatively include registration failure indication information. When the registration failure indication information is received, it indicates that the terminal fails to perform registration, and the indication information may indicate a specific failure cause. In addition, for example, the terminal registration response may further include the sensing type subscribed to by the terminal.

409: Optionally, the terminal sends a registration complete message to the AMF, to notify the AMF that the terminal has completed registration.

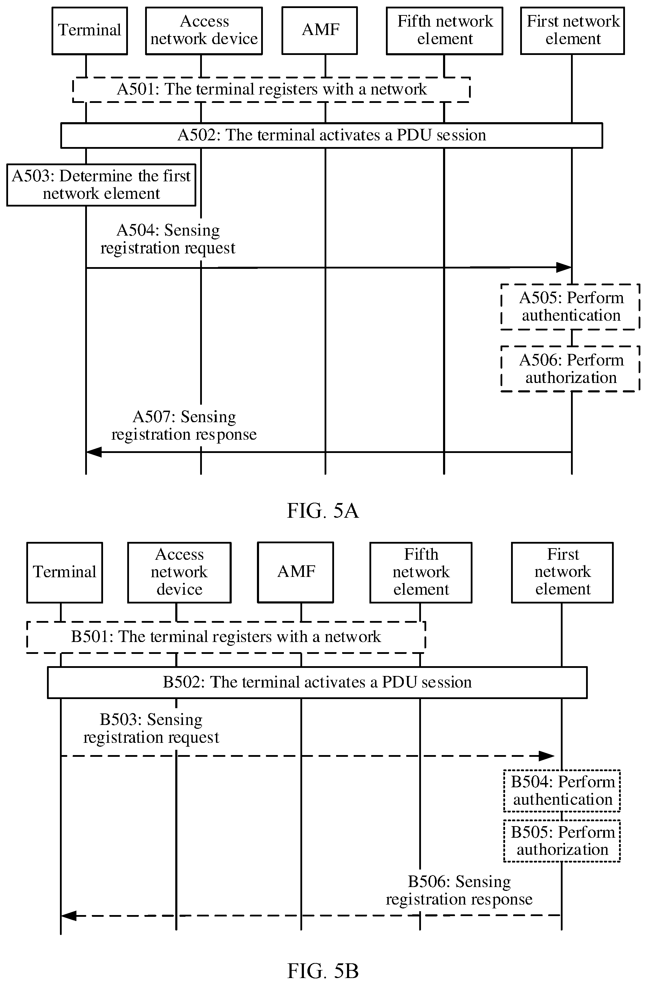

In a possible instance, before the terminal sends the sensing registration request to the first network element, the registration method further includes: The terminal determines the first network element, so that the terminal can register with the first network element via a user plane. In this embodiment, the first network element is an SF. For a specific process, refer to the following related descriptions of FIG. 5A and FIG. 5B.

FIG. 5A is a specific schematic flowchart of a registration method according to an embodiment of this application. The registration method includes the following steps.

A501: Optionally, a terminal registers with a network.

Specifically, for a specific process in which the terminal registers with the network, refer to related descriptions of FIG. 4. Details are not described again. Optionally, the terminal may register with the network according to an existing terminal registration method. This is not particularly limited.

A502: The terminal activates a PDU session.

For example, the terminal may activate the PDU session according to a stipulation in 4.3.2.2 of the 23.502 protocol. A process of activating the PDU session needs participation of an access network device, an SMF, a UPF, a UDM, and other network elements. The process includes a process of interaction between the SMF and the UDM. The SMF may perform authentication and/or authorization processing on the terminal. With network evolution and development, a process in which the terminal activates the PDU session may change. This falls within the protection scope of this application. This is not particularly limited.

A503: The terminal determines a first network element.

Specifically, in this embodiment, the first network element may be an SF. For example, the terminal may determine the first network element based on local network element configuration information, where the network element configuration information indicates the first network element.

For example, the network element configuration information directly indicates a user plane address of the SF, and the user plane address of the SF may be an IP address of the SF, or the user plane address of the SF is the IP address and a communication port number of the SF.

For another example, the network element configuration information indirectly indicates a user plane address of the SF. For example, the network element configuration information indicates a fully qualified domain name (full qualified domain name, FQDN) of the SF. The terminal may obtain the user plane address of the SF based on the FQDN. For example, the terminal requests, based on the FQDN of the SF, to obtain the user plane address (an IP address, or the IP address and a communication port number) of the SF from a domain name system (domain name system, DNS).

A504: The terminal sends a sensing registration request to the first network element.

Specifically, for specific descriptions of the sensing registration request, refer to related descriptions of step 301. Details are not described again.

A505: The first network element performs authentication on the terminal.

For example, the first network element may perform authentication processing on the terminal. Specifically, the first network element stores ID information corresponding to a subscriber. In this way, the first network element may determine, based on ID information of the terminal, whether a user of the terminal is a valid user, namely, the subscriber. Alternatively, the first network element performs authentication processing on the terminal via a fifth network element. The first network element indicates the fifth network element to perform authentication processing on the terminal based on ID information of the terminal, and the first network element receives authentication response information returned by the fifth network element, to determine an authentication result of the terminal. For example, when determining, based on the ID information of the terminal, that the terminal is a subscriber, the fifth network element returns the ID information of the terminal to the first network element, so that the first network element learns that the terminal is the subscriber. In this embodiment, the fifth network element may be a UDM.

A506: The first network element performs authorization on the terminal.

For example, the first network element may perform authorization processing on the terminal, or the first network element performs authorization processing on the terminal via the fifth network element.

Specifically, the first network element stores subscription data corresponding to the subscriber. The subscription data includes sensing permission indication information and a specific sensing type that is subscribed to (namely, an authorized sensing type). In addition, the subscription data may further include indication information of a sensing frequency band that is allowed to be used by the terminal, and the sensing frequency band indication information may indicate a specific frequency band, or indicate ID information corresponding to the specific frequency band. The first network element may determine the subscription data of the terminal based on the ID information of the terminal, to implement authorization processing on the terminal. Similarly, the first network element may obtain the subscription data of the terminal from the fifth network element, to authorize the terminal.

Step A505 and step A506 are optional steps. When authentication and/or authorization processing are/is performed on the terminal in step A501, neither step A505 nor step A506 may be performed, both of step A505 and step A506 may be performed, or only one of step A505 and step A506 may be performed. When the existing registration method is used in step A501, both step A505 and step A506 may be performed, or only one of step A505 and step A506 may be performed.

A507: The first network element sends a sensing registration response to the terminal.

Specifically, for specific descriptions of the sensing registration response, refer to related descriptions of step 302. Details are not described again.

For example, the first network element stores terminal-related information carried in the sensing registration request, to complete registration information registration, and the first network element sends the sensing registration response to the terminal.

For another example, when authentication in step A505 succeeds and/or authorization in step A506 succeeds, the first network element stores terminal-related information carried in the sensing registration request, to complete registration information registration, and then the first network element sends the sensing registration response to the terminal.

In a possible embodiment, the terminal sends an address request to a second network element, where the address request is used to request the second network element to determine a user plane address of the first network element. The terminal receives the user plane address of the first network element from the second network element. In this embodiment, the second network element may be an SMF. For example, the address request is sent via a PDU session establishment request. Correspondingly, the user plane address of the first network element is sent to the terminal via a response to the PDU session establishment request.

Further, for example, the address request may be carried in a protocol configuration option (protocol configuration option, PCO) in the PDU session establishment request.

For another example, certainly, the address request may be carried in a control plane message, for example, an N1 message in 5G. For example, the address request is parallel to the PCO, or the address request is parallel to the PDU session establishment request.

In addition, in a terminal registration request, a sensing capability support indication may be parallel to the PCO, the sensing capability support indication may be parallel to the PDU session establishment request, or the sensing capability support indication is carried in the PCO.

FIG. 5B is a specific schematic flowchart of another registration method according to an embodiment of this application. The registration method includes the following steps.

B501: Optionally, a terminal registers with a network.

Specifically, for a specific process in which the terminal registers with the network, refer to related descriptions of FIG. 4. Details are not described again. Optionally, the terminal may register with the network according to an existing terminal registration method. This is not particularly limited.

B502: The terminal activates a PDU session.

Specifically, for a process of activating the PDU session, refer to related descriptions of step A502. Details are not described again. In this embodiment, an example in which an address request is carried in a protocol configuration option in a PDU session establishment request is used. When requesting to activate the PDU session, the terminal requests an SMF to return a user plane address of a first network element. The first network element may be an SF. In response to the address request, the SMF determines the first network element based on a location area in which an access network device is located and that is carried in the PDU session establishment request, and then the SMF notifies the terminal of information about the first network element.

In this embodiment, the SMF may determine the user plane address of the first network element via a fourth network element, and the fourth network element may determine the first network element based on the location area in which the access network device is located, to determine the user plane address of the first network element. In this embodiment, the fourth network element may be an NRF. In another embodiment, the SMF may determine the first network element based on a location area in which an access network device is located and local configuration information. First network elements corresponding to different location areas of the access network device are configured in the local configuration information. Alternatively, the SMF may determine the first network element based on ID information of the terminal and local configuration information. In this case, first network elements corresponding to different ID information of terminals are configured in the local configuration information.

For example, the PDU session establishment request may further include at least one of location information of the terminal, sensing area information of the terminal, a sensing type additionally supported by the terminal, and the like. Based on at least two of the location area in which the access network device is located, the location information of the terminal, the sensing area information of the terminal, and the sensing type additionally supported by the terminal, the SMF may determine the user plane address of the first network element (or the SMF may determine the user plane address of the first network element via the NRF).

B503: The terminal sends a sensing registration request to the first network element.

Specifically, for specific descriptions of the sensing registration request, refer to related descriptions of step 301. Details are not described again.

B504: The first network element performs authentication on the terminal.

B505: The first network element performs authorization on the terminal.

Step B504 and step B505 are optional steps. For specific descriptions, refer to related descriptions of step A505 and step A506. Details are not described again.

B506: The first network element sends a sensing registration response to the terminal.

Specifically, for specific descriptions of the sensing registration response, refer to related descriptions of step 302. Details are not described again. For specific descriptions of step B506, refer to related descriptions of step A507. Details are not described again.

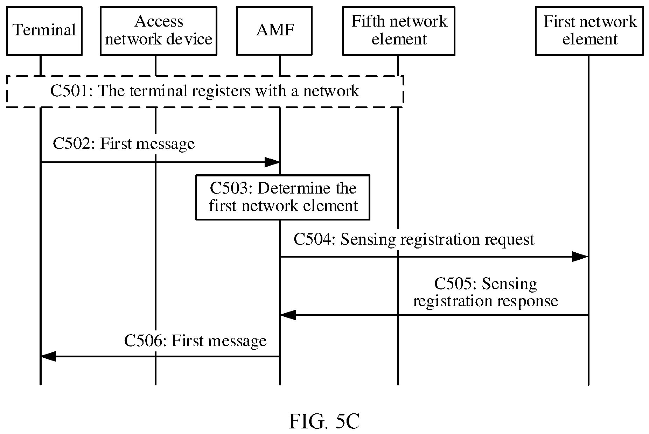

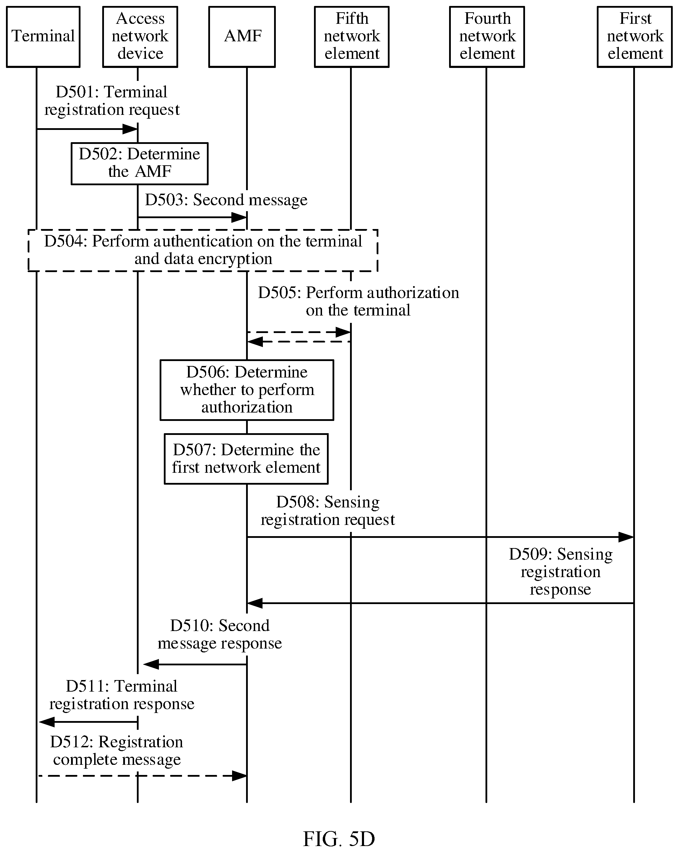

In a possible instance, when the first network element is a sensing network element, the terminal sends the sensing registration request to the first network element via an AMF network element. For specific descriptions, refer to descriptions of FIG. 5C and FIG. 5D. Details are not described.

FIG. 5C is a specific schematic flowchart of another registration method according to an embodiment of this application. A terminal registers with a first network element via a control plane. The registration method specifically includes the following steps.

C501: Optionally, the terminal registers with a network.

Specifically, for a specific process in which the terminal registers with the network, refer to related descriptions of FIG. 4. Details are not described again. Optionally, the terminal may register with the network according to an existing terminal registration method. This is not particularly limited.

C502: The terminal sends a first message to an AMF network element, where the first message includes a sensing registration request of the terminal.

Specifically, the first message may be an N1 message. In addition, with network evolution and development, the first message may alternatively be of another message type. This is not particularly limited. In addition, the terminal sends the first message to the AMF network element via an access network device. Therefore, the first message further includes location area information of the access network device.

For example, the location area information (location information) of the access network device is indicated by a cell global identifier (cell global identifier, CGI) and a tracking area identity (tracking area identity, TAI).

C503: The AMF determines the first network element.

Specifically, in this embodiment, the first network element is an SF. Optionally, the AMF locally determines the first network element. In an example, the AMF determines the first network element based on the location area information of the access network device or ID information of the terminal, and sends the sensing registration request to the first network element. In this embodiment, the AMF determines, based on a local mapping relationship, the SF that processes the sensing registration request of the terminal. For example, the mapping relationship is a correspondence between a network element and a serving location area of the network element. In this case, the mapping relationship is a correspondence between a plurality of SFs and serving location areas corresponding to the plurality of SFs. The AMF performs matching in the mapping relationship based on the location area information of the access network device that is in the first message, and can determine one SF for processing the sensing registration request of the terminal. A location area indicated by the location area information of the access network device is located in a serving location area of the SF. For another example, the mapping relationship is a correspondence between the first network element and the ID information of the terminal. The AMF performs matching in the mapping relationship based on the ID information of the terminal, to determine one first network element for processing the sensing registration request of the terminal.

In another example, the AMF determines the SF based on local preset SF information, and the preset SF information indicates one or more preset SFs. When receiving a sensing registration request from the access network device, the AMF sends the sensing registration request to the preset SF. For example, when there are a plurality of preset SFs, the sensing registration request may be sequentially sent to the preset SFs in a preset sequence. For example, it is assumed that the preset SFs include an SF 1, an SF 2, and an SF 3, and the preset sequence is the SF 3, the SF 1, and the SF 2. In this case, when receiving the sensing registration request from the access network device for the first time, the AMF sends the sensing registration request to the SF 3 for processing; when receiving the sensing registration request from the access network device again, the AMF sends the sensing registration request to the SF 1 for processing; and so on.

Optionally, the AMF may determine the first network element via a fourth network element, and the fourth network element may perform matching in a locally stored mapping relationship based on the location area information of the access network device or the ID information of the terminal, to determine the first network element. In this embodiment, the fourth network element may be an NRF. For example, the mapping relationship is a correspondence between a network element and a serving location area of the network element. In this case, the mapping relationship is a correspondence between a plurality of SFs and serving location areas corresponding to the plurality of SFs. The AMF performs matching in the mapping relationship based on the location area information of the access network device that is in the first message, and can determine one SF for processing the sensing registration request of the terminal. A location area indicated by the location area information of the access network device is located in a serving location area of the SF. For another example, the mapping relationship is a correspondence between the first network element and the ID information of the terminal. The AMF performs matching in the mapping relationship based on the ID information of the terminal, to determine one first network element for processing the sensing registration request of the terminal.

C504: The AMF sends the sensing registration request to the first network element.

Specifically, for specific descriptions of the sensing registration request, refer to related descriptions of step 301. Details are not described again. In this embodiment, the sensing registration request further includes the location area information of the access network device.

C505: The first network element sends a sensing registration response to the AMF.

Specifically, for specific descriptions of the sensing registration response, refer to related descriptions of step 302. Details are not described again. For specific descriptions of step C505, refer to related descriptions of step A507. Details are not described again.

C506: The AMF sends a first message to the terminal, where the first message includes the sensing registration response.

Specifically, the first message may be an N1 message. In addition, with network evolution and development, the first message may alternatively be of another message type. This is not particularly limited.

In a possible instance, that the terminal sends the sensing registration request to the first network element via an AMF network element includes:

The terminal sends a terminal registration request to the AMF network element, where the terminal registration request includes a sensing capability support indication and the sensing registration request, and the sensing capability support indication indicates that the terminal is configured to perform sensing, so that the AMF network element performs authentication and/or authorization on the terminal based on the sensing capability support indication and sends the sensing registration request to the first network element. For specific descriptions, refer to descriptions of FIG. 5D. In other words, in this embodiment of this application, when the terminal registration request is initiated, the sensing registration request is also initiated.

FIG. 5D is a specific schematic flowchart of another registration method according to an embodiment of this application. The registration method includes the following steps.

D501: A terminal sends a terminal registration request to an access network device, where the terminal registration request includes a sensing capability support indication and a sensing registration request, and the sensing capability support indication indicates that the terminal is configured to perform sensing.

D502: The access network device determines an AMF.

Specifically, for specific descriptions of step D502, refer to descriptions of step 402. Details are not described again.

D503: The access network device sends a second message to the AMF, where the second message includes the terminal registration request.

Specifically, the second message may be an N2 message. In addition, with network evolution and development, the second message may alternatively be of another message type. This is not particularly limited.

D504: The AMF network element performs authentication on the terminal and data encryption based on the sensing capability support indication.

Specifically, for specific descriptions of step D504, refer to descriptions of step 404. Details are not described again.

D505: The AMF network element performs authorization on the terminal based on the sensing capability support indication.

Specifically, for specific descriptions of step D505, refer to descriptions of step 405. Details are not described again.

One of step D504 and step D505 may be selected and performed. When step D505 is performed, step D506 needs to be performed. Alternatively, both step D504 and step D505 may be performed.

D506: The AMF determines whether to perform authorization.

Specifically, for specific descriptions of step D506, refer to descriptions of step 406. Details are not described again.

D507: The AMF determines a first network element.

Specifically, for specific descriptions of step D507, refer to descriptions of step C503. Details are not described again.

D508: The AMF sends the sensing registration request to the first network element.

Specifically, for specific descriptions of step D508, refer to descriptions of step C504. Details are not described again.

D509: The first network element sends a sensing registration response to the AMF.

For specific descriptions of the sensing registration response, refer to related descriptions of step 302. Details are not described again. For specific descriptions of step D509, refer to related descriptions of step A507. Details are not described again.

D510: The AMF sends a second message response to the access network device. The second message response includes registration accept indication information. Further, the second message response may further include sensing permission indication information and/or ID information of the terminal. The second message response may further include a sensing type subscribed to by the terminal.

For example, a specific form of the second message response may alternatively be a second message. In addition, with network evolution and development, the second message response may alternatively be of another message type. This is not particularly limited.

D511: The access network device sends a terminal registration response to the terminal.

Specifically, the terminal registration response includes the registration accept indication information, and the terminal registration response may further include the sensing permission indication information and/or the ID information of the terminal. An example in which the terminal registration response includes the registration accept indication information and the sensing permission indication information is used. When the registration accept indication information and the sensing permission indication information are received, it indicates that the terminal performs registration successfully. For example, the terminal registration response may alternatively include registration failure indication information. When the registration failure indication information is received, it indicates that the terminal fails to perform registration, and the indication information may indicate a specific failure cause. In addition, for example, the terminal registration response may further include the sensing type subscribed to by the terminal and/or sensing frequency band indication information of the terminal.

D512: Optionally, the terminal sends a registration complete message to the AMF, to notify the AMF that the terminal has completed registration.

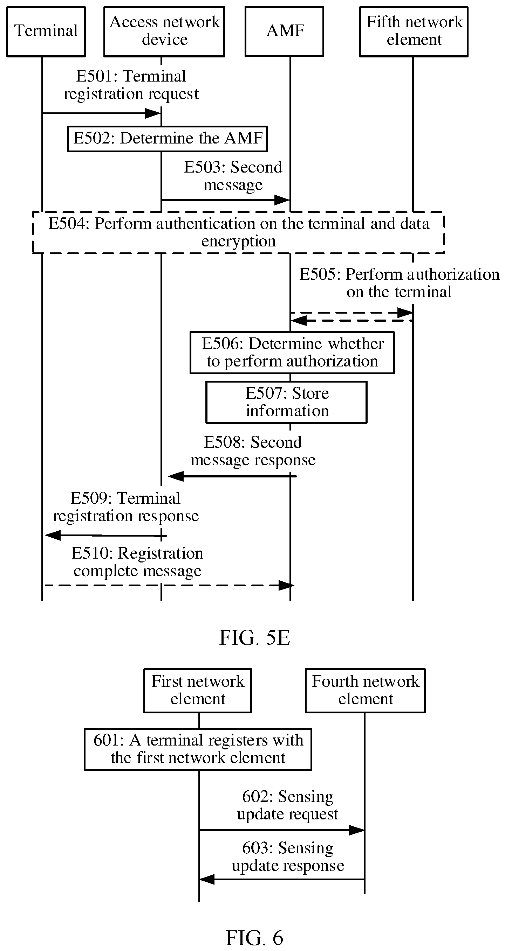

In a possible instance, when the first network element is an AMF network element, that the terminal sends the sensing registration request to the first network element includes:
The terminal sends a terminal registration request to the AMF network element, where the terminal registration request includes a sensing capability support indication and the sensing registration request, and the sensing capability support indication indicates that the terminal is configured to perform sensing, so that the AMF network element performs authentication and/or authorization on the terminal based on the sensing capability support indication and obtains a sensing registration response in response to the sensing registration request. When initiating the terminal registration request, the terminal also initiates the sensing registration request, so that communication overheads of the terminal can be reduced. For specific descriptions, refer to descriptions of FIG. 5E.

FIG. 5E is a specific schematic flowchart of another registration method according to an embodiment of this application. The registration method includes the following steps.

E501: A terminal sends a terminal registration request to an access network device, where the terminal registration request includes a sensing capability support indication and a sensing registration request, and the sensing capability support indication indicates that the terminal is configured to perform sensing.

E502: The access network device determines an AMF.

Specifically, for specific descriptions of step E502, refer to descriptions of step 402. Details are not described again.

E503: The access network device sends a second message to the AMF, where the second message includes the terminal registration request.

Specifically, the second message may be an N2 message. In addition, with network evolution and development, the second message may alternatively be of another message type. This is not particularly limited.

E504: The AMF network element performs authentication on the terminal and data encryption based on the sensing capability support indication.

Specifically, for specific descriptions of step E504, refer to descriptions of step 404. Details are not described again.

E505: The AMF network element performs authorization on the terminal based on the sensing capability support indication.

Specifically, for specific descriptions of step E505, refer to descriptions of step 405. Details are not described again.

One of step E504 and step E505 may be selected and performed. When step E505 is performed, step E506 needs to be performed. Alternatively, both step E504 and step E505 may be performed.

E506: The AMF determines whether to perform authorization.

Specifically, for specific descriptions of step E506, refer to descriptions of step 406. Details are not described again.

E507: The AMF stores information, to be specific, stores related registration information of the terminal, that is, related information carried in the sensing registration request.

E508: The AMF sends a second message response to the access network device. The second message response includes registration accept indication information. Further, the second message response may further include sensing permission indication information and/or ID information of the terminal. The second message response may further include a sensing type subscribed to by the terminal and/or sensing frequency band indication information of the terminal.

For example, a specific form of the second message response may alternatively be a second message. In addition, with network evolution and development, the second message response may alternatively be of another message type. This is not particularly limited.

E509: The access network device sends a terminal registration response to the terminal.

Specifically, the terminal registration response includes the registration accept indication information. Further, the second message response may further include the sensing permission indication information and/or the ID information of the terminal. An example in which the terminal registration response includes the registration accept indication information and the sensing permission indication information is used. When the registration accept indication information and the sensing permission indication information are received, it indicates that the terminal performs registration successfully. For example, the terminal registration response may alternatively include registration failure indication information. When the registration failure indication information is received, it indicates that the terminal fails to perform registration, and the indication information may indicate a specific failure cause. In addition, for example, the terminal registration response may further include the sensing type subscribed to by the terminal and/or the sensing frequency band indication information of the terminal.

E510: Optionally, the terminal sends a registration complete message to the AMF, to notify the AMF that the terminal has completed registration.

FIG. 6 is a schematic flowchart of an information update according to an embodiment of this application. The following steps are specifically included.

601: A terminal registers with a first network element.

602: The first network element sends a sensing update request to a fourth network element, where the sensing update request is used to request the fourth network element to update sensing capability information of the first network element.

Specifically, updated sensing capability information in this embodiment is sensing capability information of the newly registered terminal. In this embodiment, the first network element may be an SF, and the fourth network element may be an NRF. After accepting registration of one or more (a specific quantity may be adjusted based on an actual requirement) terminals, the first network element may send the sensing update request to the fourth network element, to update the sensing capability information of the first network element in time. Alternatively, the first network element may periodically send the sensing update request to the fourth network element.

For example, the sensing update request includes ID information of the SF and the sensing capability information of the terminal. For example, the sensing capability information includes sensing area information of the terminal. Further, for example, the sensing capability information may further include a sensing type additionally supported by the terminal and/or sensing quality information of the terminal.

603: The first network element receives a sensing update response sent by the fourth network element.

Specifically, after updating a sensing area of the first network element, the fourth network element sends the sensing update response to the first network element. For example, information carried in the sensing update response is the same as information carried in the sensing update request.

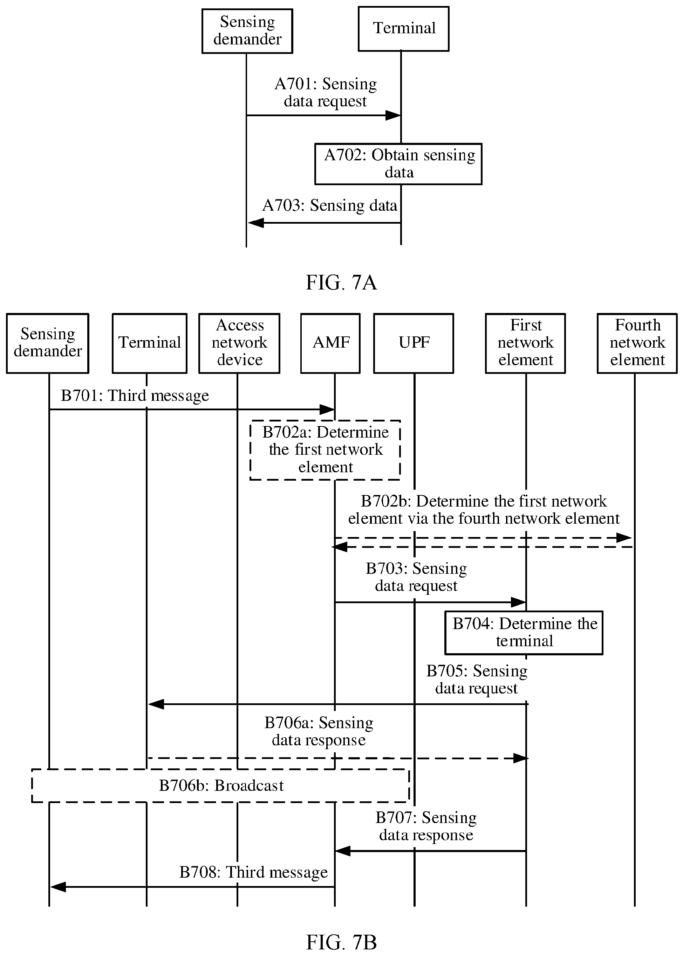

In embodiments of this application, when having a sensing service requirement, a sensing demander may initiate a sensing data request to obtain sensing data. Specifically, FIG. 7A is a schematic flowchart of a sensing service according to an embodiment of this application. The following steps are included.

A701: A terminal receives a sensing data request from a sensing demander.

The sensing demander includes at least one of the following: a first network element, an application service function network element AF, or a terminal device. In this case, the terminal device may be understood as a terminal having a sensing requirement, and may be the terminal described in the foregoing embodiment, or may be another terminal.

For example, when the sensing demander is the AF, the AF may send the sensing data request to the first network element via a third network element, and then send the sensing data request to the terminal via the first network element. In this case, the sensing data request is obtained by the first network element from the third network element. In this embodiment, the third network element may be an NEF.

Further, for example, the sensing data request includes sensing area information, and the sensing data request is used to request sensing data of an area indicated by the sensing area information. The sensing area information is information about an area requested to be sensed. The sensing area information is interchangeable with sensing area, sensitive area, request area, sensing area-related information, request area information, sensitive area information, and the like. For example, the sensing area information may indicate an absolute location or a relative location, or the sensing area information indicates a current location (which may be understood as an alternative name rather than specific location information) of the sensing demander. In this embodiment, the sensing demander may be a UE.

For example, the sensing data request further includes at least one of the following: reporting frequency of the sensing data, duration of reporting the sensing data, a format of the sensing data, a reporting indication message for sensing data quality information, a reporting filter condition of the sensing data, minimum duration for which a sensed target stays in a sensing area, and an additional sensing type.

The format of the sensing data indicates a specific type of sensing data needed by the sensing demander. For example, the format of the sensing data may be sensing result data, original sensing data, or intermediate data obtained by performing post-processing on the original sensing data. Specifically, for example, the sensing result data may be a specific type of the sensed target, for example, a person, an animal, or a means of transportation like a vehicle. An example in which the sensing type is a radar is used. The original sensing data is original radar sensing data, and the intermediate data is, for example, a cluster (cluster).

The reporting indication information for sensing data quality information indicates whether to report sensing data quality information corresponding to the sensing data. The reporting indication information for sensing data quality information is interchangeable with sensing data quality reporting indication, sensing data quality reporting-related indication information, sensing data quality reporting-related indication, sensing quality reporting indication, and the like.

The sensing data quality information includes at least one of the following: a range standard deviation, a velocity standard deviation, a false alarm probability, a detected cluster or object validity state parameter, and a Doppler state parameter.

The range standard deviation is interchangeable with range-related standard deviation, range deviation, range error, and the like. A range may be a distance between a detected object or cluster and the terminal, may be a horizontal distance and/or a vertical distance that correspond/corresponds to the range, or may be coordinate information of the detected object or cluster. The range standard deviation may be a specific value, or an interval of different range standard deviation values indicated by number IDs, letters, or the like.

The velocity standard deviation is interchangeable with velocity-related standard deviation, velocity deviation, velocity error, and the like. A velocity may be an absolute value of a radial velocity and/or a vertical velocity that are/is of an object, or may be a relative velocity. The velocity standard deviation may be a specific value, or an interval of different velocity standard deviation values indicated by number IDs, letters, or the like.

The false alarm probability is interchangeable with false alarm-related probability or the like. The false alarm probability is, for example, a probability that the detected cluster or object is a false target caused due to multipath.

The detected cluster or object validity state parameter is interchangeable with detected cluster or object validity state-related parameter, validity state, or the like. The detected cluster or object validity state parameter includes an invalid state and a valid state, and may further include a cause for determining as the invalid state and a cause for determining as the valid state.

The Doppler state parameter is interchangeable with Doppler state-related parameter and the like. The Doppler state parameter includes a validity state of a radial velocity of the detected cluster or object and a corresponding cause.

For example, if the format of the returned sensing data is an object, the following information may be further included: object acceleration information (including acceleration information in a horizontal and/or vertical direction), object type information, and object size information (including at least one of a length, a width, and a height). The object acceleration information is interchangeable with object acceleration-related information, object acceleration, and the like. The object type information is interchangeable with object type, object category, object category information, and the like. The object size information is interchangeable with size of the object, size information of the object, object size, and the like.

The sensing demander may set the reporting filter condition of the sensing data based on an actual requirement of the sensing demander. In this way, only sensing data that meets the reporting filter condition is provided for the sensing demander.

When the sensing data request carries the additional sensing type, it indicates that the sensing demander requests to obtain data of the additional sensing type.

A702: The terminal obtains the sensing data based on the sensing data request.

A703: The terminal provides the sensing data for the sensing demander.

In this embodiment, the terminal may obtain the sensing data in response to the sensing data request from the sensing demander, and provide the sensing data for the sensing demander, to meet a sensing requirement of the sensing demander.

The following uses four specific instances to describe in detail a specific process of a sensing service.

FIG. 7B shows an example procedure in which a terminal having a sensing requirement requests a sensing service. The following steps are included.

B701: The terminal having the sensing requirement sends a third message to an AMF.

The third message includes a sensing data request. The sensing data request includes sensing area information. Further, for example, the sensing data request may further include other information such as reporting frequency of sensing data. In this embodiment, the third message may be a signaling plane interface N1 message. In addition, with network evolution and development, the third message may alternatively be of another message type. This is not particularly limited.

In this embodiment, a first network element may be an SF, and a sensing demander may be the terminal device having the sensing requirement.

For example, the terminal device having the sensing requirement may first send the third message to an access network device, and then the access network device sends the third message to the AMF. When sending the third message to the AMF, the access network device also transmits a TAI of the access network device to the AMF.

B702a: The AMF locally determines the first network element.

Specifically, the AMF performs matching in a locally stored correspondence between the first network element and a sensing area of the first network element based on the sensing area information in the sensing data request, to determine the first network element that processes the sensing data request.

For example, when the sensing area information indicates an absolute location or a relative location, matching may be performed in the correspondence directly based on the sensing area information, to determine the first network element.

For another example, when the sensing area information indicates a current location of the sensing demander, the AMF or the SF may obtain an absolute location or a relative location of the sensing demander (namely, the UE) from an LMF, and then the AMF performs matching in the correspondence based on the absolute location or the relative location of the UE, to determine the first network element. When the SF requests to obtain the location information of the UE from the LMF, the AMF may determine, based on the TAI of the access network device in step B701, which SF obtains the location information of the UE from which LMF.

B702b: The AMF determines the first network element via a fourth network element.

In this embodiment, the fourth network element may be an NRF. The sensing data request includes the sensing area information. In this case, the NRF may perform matching in a correspondence between the first network element and a sensing area of the first network element based on the sensing area information, to determine the first network element that processes the sensing data request. The NRF provides the first network element obtained through matching for the AMF.

Specifically, the AMF sends a network element determining request to the NRF, to request the NRF to determine the first network element. After determining the first network element, the NRF sends a network element determining response to the AMF, to provide information about the first network element for the AMF. The network element determining request includes the sensing area information in the sensing data request. In addition, the network element determining request may further include an additional sensing type. For example, when the sensing area information indicates a current location of the sensing demander, after the AMF or the SF first requests to obtain an absolute location or a relative location of the UE from an LMF, the AMF may replace the sensing area information in the sensing data request with the obtained location information, and then send the sensing data request to the NRF.

One of step B702a and step B702b may be selected and performed.

B703: The AMF sends the sensing data request to the first network element.

B704: The first network element determines a terminal based on the sensing area information.

Specifically, the first network element may determine, based on the sensing area information, ID information of a terminal that meets a requirement, and may send the sensing data request to the terminal based on the ID information of the terminal.

B705: The first network element sends the sensing data request to the terminal, so that the terminal performs sensing to obtain the sensing data.

For example, the first network element may send the sensing data request to the terminal via a control plane. Specifically, the first network element may first send the sensing data request to the AMF, the AMF sends the sensing data request to the access network device via an N1 message, and then the access network device sends the sensing data request to the terminal.

For another example, the first network element may alternatively send the sensing data request to the terminal via a user plane. Specifically, the first network element may first send the sensing data request to a UPF, and then the UPF sends the sensing data request to the terminal.

For example, the first network element may add a user plane address of the first network element to the sensing data request, and then send the sensing data request to the terminal. In this way, the terminal may select, based on an actual case, a manner of returning the sensing data to the first network element. For example, when a data volume of the sensing data is large, the sensing data may be sent to the first network element based on the user plane address of the first network element via the user plane. This reduces data sending time, and helps improve response efficiency of the terminal on the sensing service. For example, the first network element sends the sensing data request to the terminal via the control plane. Because the sensing data request carries the user plane address of the first network element, the terminal may report the sensing data to the first network element based on the user plane address of the first network element.

B706a: The terminal sends a sensing data response to the first network element, where the sensing data response carries the sensing data that meets a requirement. For example, the sensing data response may further include at least one of the following: a format of the sensing data, sensing data quality information, data of the additional sensing type, and a channel model parameter of the terminal.

Same as step B705, the sensing data response may be sent to the first network element via the control plane or the user plane.

B706b: The terminal broadcasts the sensing data, where the broadcast data may be the same as or different from data in the sensing data response. If the terminal device having the sensing requirement can receive the broadcast sensing data, step B707 and step B708 may be skipped.

One of step B706a and step B706b may be selected and performed.

B707: In correspondence to step B706a, the first network element sends the sensing data response to the AMF.

B708: The AMF sends the sensing data response to the sensing demander via a third message.

In this embodiment, the third message may be an N1 message. In addition, with network evolution and development, the third message may alternatively be of another message type. This is not particularly limited.

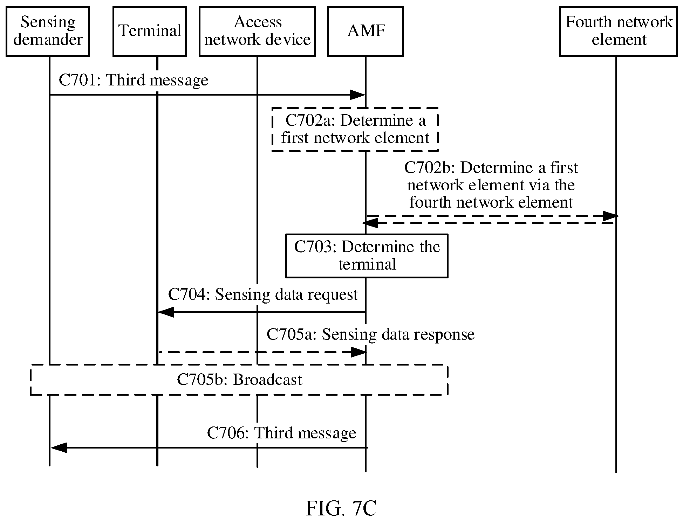

FIG. 7C shows an example procedure in which a terminal having a sensing requirement requests a sensing service. The following steps are included.

C701: A sensing demander sends a third message to an AMF.

In this embodiment, the sensing demander may be the terminal device having the sensing requirement.

For example, the terminal device having the sensing requirement may first send the third message to an access network device, and then the access network device sends the third message to the AMF. When sending the third message to the AMF, the access network device also transmits a TAI of the access network device to the AMF.

C702a: The AMF locally determines a first network element.

Specifically, the AMF performs matching in a locally stored correspondence between the first network element and a sensing area of the first network element based on sensing area information in a sensing data request, to determine the first network element that processes the sensing data request. In this embodiment, the first network element may be an AMF. The determined first network element that processes the sensing data request may be the same as or different from the AMF in step C701. In FIG. 7C, an example in which the first network element that processes the sensing data request is the same as the AMF in step C701 is used.

C702b: The AMF determines a first network element via a fourth network element.

In this embodiment, the fourth network element may be an NRF. The sensing data request includes sensing area information. In this case, the NRF may perform matching in a correspondence between the first network element and a sensing area of the first network element based on the sensing area information, to determine the first network element that processes the sensing data request. The NRF provides the first network element obtained through matching for the AMF.

One of step C702a and step C702b may be selected and performed.

C703: The first network element determines a terminal based on the sensing area information.

Specifically, the first network element may determine, based on the sensing area information, ID information of a terminal that meets a requirement, and may send the sensing data request to the terminal based on the ID information of the terminal.

C704: The first network element sends the sensing data request to the terminal, so that the terminal performs sensing to obtain sensing data.

For specific descriptions of step C704, refer to related descriptions of step B705. Details are not described again.

C705a: The terminal sends a sensing data response to the first network element, where the sensing data response carries the sensing data that meets a requirement. For example, the sensing data response may further include at least one of the following: a format of the sensing data, sensing data quality information, data of an additional sensing type, and a channel model parameter of the terminal.

C705b: The terminal broadcasts the sensing data, where the broadcast data may be the same as or different from data in the sensing data response. If the terminal device having the sensing requirement can receive the broadcast sensing data, step C706 may be skipped.

One of step C705a and step C705b may be selected and performed.

C706: In correspondence to step C705a, the first network element sends the sensing data response to the sensing demander via a third message.

In this embodiment, the third message may be an N1 message. In addition, with network evolution and development, the third message may alternatively be of another message type. This is not particularly limited.

For specific details of FIG. 7C, refer to related descriptions of FIG. 7B. Details are not described again.

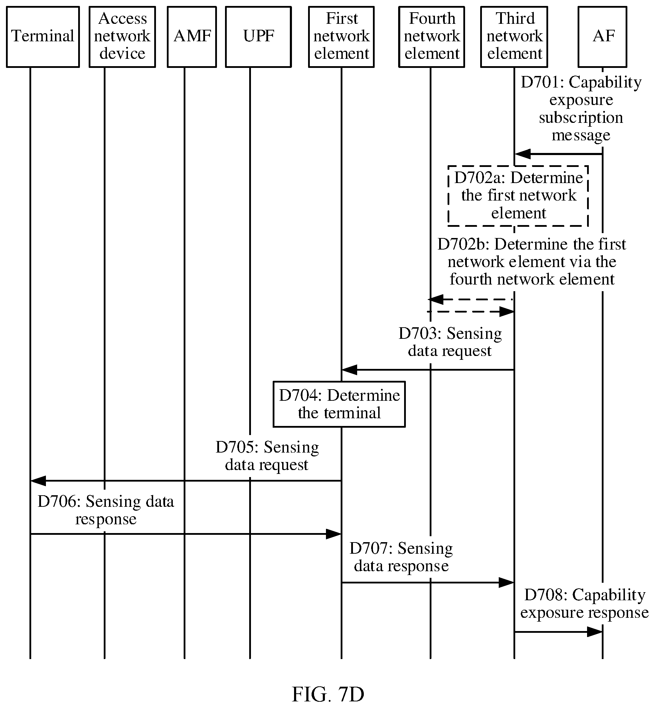

FIG. 7D shows an example procedure in which an AF requests a sensing service. The following steps are included.

D701: The AF sends a capability exposure subscription message to a third network element.

The capability exposure subscription message includes a sensing data request. In this embodiment, the third network element may be an NEF.

D702a: The third network element locally determines a first network element.

In this embodiment, the first network element may be an SF. The NEF performs matching in a locally stored correspondence between the first network element and a sensing area of the first network element based on sensing area information in the sensing data request, to determine the first network element that processes the sensing data request.

D702b: The third network element determines a first network element via a fourth network element.

In this embodiment, the fourth network element may be an NRF. The sensing data request includes sensing area information. In this case, the NRF may perform matching in a correspondence between the first network element and a sensing area of the first network element based on the sensing area information, to determine the first network element that processes the sensing data request. The NRF provides the first network element obtained through matching for the NEF.

One of step D702a and step D702b may be selected and performed.

D703: The third network element sends the sensing data request to the first network element.

D704: The first network element determines a terminal based on the sensing area information.

D705: The first network element sends the sensing data request to the terminal, and the terminal performs sensing to obtain sensing data.

Specifically, for specific descriptions of step D705, refer to related descriptions of step B705. Details are not described again.

D706: The terminal sends a sensing data response to the first network element.

D707: The first network element sends the sensing data response to the third network element.

D708: The third network element sends a capability exposure response or a capability exposure notification message to the AF, where the capability exposure response or the capability exposure notification message includes related information carried in the sensing data response.

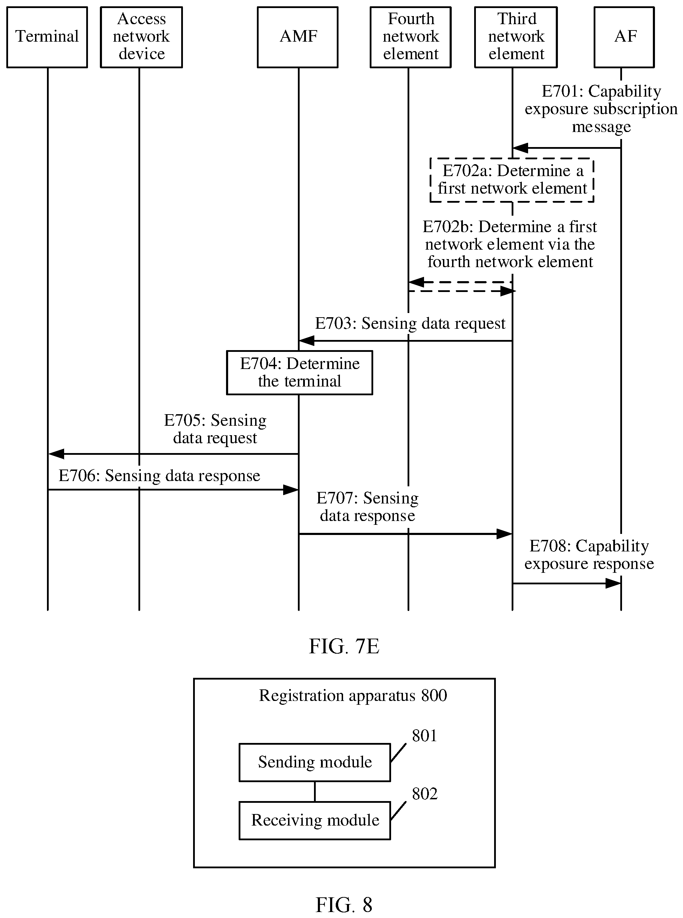

FIG. 7E shows another example procedure in which an AF requests a sensing service. The following steps are included.

E701: The AF sends a capability exposure subscription message to a third network element.

The capability exposure subscription message includes a sensing data request. In this embodiment, the third network element may be an NEF.

E702a: The third network element locally determines a first network element.

In this embodiment, the first network element may be an AMF. The NEF performs matching in a locally stored correspondence between the first network element and a sensing area of the first network element based on sensing area information in the sensing data request, to determine the first network element that processes the sensing data request.

E702b: The third network element determines a first network element via a fourth network element.

In this embodiment, the first network element may be an AMF. The fourth network element may be an NRF. The sensing data request includes sensing area information. In this case, the NRF may perform matching in a correspondence between the first network element and a sensing area of the first network element based on the sensing area information, to determine the first network element that processes the sensing data request. The NRF provides the first network element obtained through matching for the NEF.

One of step E702a and step E702b may be selected and performed.

E703: The third network element sends the sensing data request to the AMF.

E704: The AMF determines a terminal based on the sensing area information.

E705: The AMF sends the sensing data request to the terminal, and the terminal performs sensing to obtain sensing data.

For example, the AMF sends the sensing data request to an access network device, and the access network device sends the sensing data request to the terminal.

E706: The terminal sends a sensing data response to the AMF.

E707: The AMF sends the sensing data response to the third network element.

E708: The third network element sends a capability exposure response or a capability exposure notification message to the AF, where the capability exposure response or the capability exposure notification message includes related information carried in the sensing data response.

For specific details of FIG. 7E, refer to related descriptions of FIG. 7D. Details are not described again.

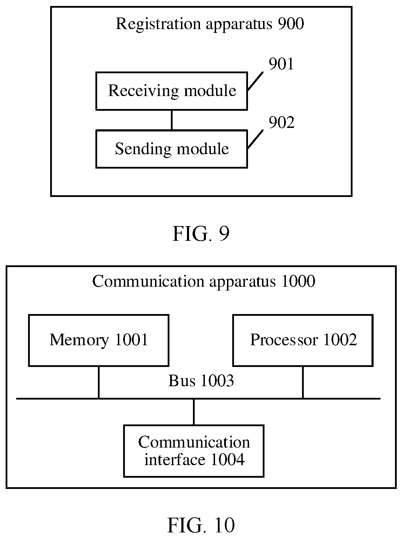

FIG. 8 and FIG. 9 are diagrams of structures of possible registration apparatuses according to embodiments of this application. These registration apparatuses may be configured to implement functions of the terminal and the first network element in the foregoing method embodiments, and therefore can also achieve beneficial effects of the foregoing method embodiments. In embodiments of this application, the registration apparatuses may be the first network element and the terminal, or may be modules (for example, chips) used in the first network element and the terminal.

As shown in FIG. 8, a registration apparatus 800 includes a sending module 801 and a receiving module 802. The registration apparatus 800 is configured to implement a function of the terminal in the method embodiment shown in FIG. 3. Alternatively, the registration apparatus 800 may include a module configured to implement any function or operation of the terminal in the method embodiment shown in FIG. 3. The module may be all or partially implemented by using software, hardware, firmware, or any combination thereof.

When the registration apparatus 800 is configured to implement the function of the terminal in the method embodiment shown in FIG. 3, the sending module 801 is configured to send a sensing registration request to the first network element, where the sensing registration request includes identity information of the terminal, location information of the terminal, and sensing area information of the terminal. The receiving module 802 is configured to receive a sensing registration response to the sensing registration request, where the sensing registration response is sent by the first network element, and includes a registration result of the terminal.

As shown in FIG. 9, a registration apparatus 900 includes a receiving module 901 and a sending module 902. The registration apparatus 900 is configured to implement a function of the first network element in the method embodiment shown in FIG. 3. Alternatively, the registration apparatus 900 may include a module configured to implement any function or operation of the first network element in the method embodiment shown in FIG. 3. The module may be all or partially implemented by using software, hardware, firmware, or any combination thereof.

When the registration apparatus 900 is configured to implement the function of the first network element in the method embodiment shown in FIG. 3, the receiving module 901 is configured to receive a sensing registration request sent by the terminal, where the sensing registration request includes identity information of the terminal, location information of the terminal, and sensing area information of the terminal. The sending module 902 is configured to send a sensing registration response to the sensing registration request to the terminal, where the sensing registration response includes a registration result of the terminal.

For example, an embodiment of this application further provides a registration system, including the registration apparatus shown in FIG. 8 and the registration apparatus shown in FIG. 9.

FIG. 10 is a diagram of a structure of a communication apparatus according to an embodiment of this application.

The communication apparatus 1000 includes a memory 1001, a processor 1002, a communication interface 1004, and a bus 1003. The memory 1001, the processor 1002, and the communication interface 1004 communicate with each other through the bus 1003. There may be one or more memories 1001, and there may be one or more processors 1002.

For example, the communication apparatus 1000 may be a chip or a chip system.

The memory 1001 may be a read-only memory (Read-Only Memory, ROM), a static storage device, a dynamic storage device, or a random access memory (Random Access Memory, RAM). The memory 1001 may store a program. When the program stored in the memory 1001 is executed by the processor 1002, the processor 1002 is configured to perform steps of the registration method in any one of the foregoing embodiments.

The processor 1002 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement the registration method in any one of the foregoing embodiments.

The processor 1002 may alternatively be an integrated circuit chip with a signal processing capability. In an implementation process, the steps of the registration method in any embodiment of this application may be completed by using an integrated logic circuit of hardware in the processor 1002 or instructions in a form of software. The processor 1002 may alternatively be a general-purpose processor, a digital signal processor (Digital Signal Processing, DSP), an application-specific integrated circuit (ASIC), a field programmable gate array (Field Programmable Gate Array, FPGA) or another programmable logic device, a discrete gate or transistor logic device, or a discrete hardware component. The processor 1002 may implement or perform the methods, steps, and logical block diagrams disclosed in embodiments of this application. The general-purpose processor may be a microprocessor, or the processor may be any conventional processor or the like. The steps of the registration method described with reference to any embodiment of this application may be directly performed and completed by a hardware decoding processor, or may be performed and completed by using a combination of hardware and a software module in the decoding processor. The software module may be located in a mature storage medium in the art, for example, a random access memory, a flash memory, a read-only memory, a programmable read-only memory, an electrically erasable programmable memory, or a register. The storage medium is located in the memory 1001, and the processor 1002 reads information in the memory 1001 and completes the registration method in any one of the foregoing embodiments in combination with hardware of the processor 1002.

The communication interface 1004 uses a transceiver apparatus, for example but not limited to a transceiver, to implement communication between the communication apparatus 1000 and another device or a communication network.

The bus 1003 may include a path for transferring information between components (for example, the memory 1001, the processor 1002, and the communication interface 1004) of the communication apparatus 1000.

It should be noted that, although only the memory, the processor, and the communication interface are shown in the communication apparatus 1000 shown in FIG. 10, in a specific implementation process, a person skilled in the art should understand that the communication apparatus 1000 further includes another component necessary for normal operation. In addition, based on a specific requirement, a person skilled in the art should understand that the communication apparatus 1000 may further include a hardware component for implementing another additional function. In addition, a person skilled in the art should understand that the communication apparatus 1000 may alternatively include only components necessary for implementing embodiments of this application, but does not necessarily include all the components shown in FIG. 10.

In several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions in the embodiments.

In addition, functional units in embodiments of this application may be integrated into one processing unit, or each unit may exist alone physically, or two or more units are integrated into one unit.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A registration method, wherein the method comprises:
sending, by a terminal, a sensing registration request to a first network element, wherein the sensing registration request comprises identity information of the terminal, location information of the terminal, and sensing area information of the terminal; and
receiving, by the terminal, a sensing registration response to the sensing registration request, wherein the sensing registration response is sent by the first network element, and comprises a registration result of the terminal.

2. The method according to claim 1, wherein when the first network element is a sensing network element, the terminal sends the sensing registration request to the first network element via an access and mobility management function network element.

3. The method according to claim 2, wherein sending, by the terminal, the sensing registration request to the first network element via the access and mobility management function network element comprises:
sending, by the terminal, a first message to the access and mobility management function network element, wherein the first message comprises the sensing registration request, so that the access and mobility management function network element determines the first network element and sends the sensing registration request to the first network element.

4. The method according to any one of claims 1 to 3, wherein before sending, by the terminal, the sensing registration request to the first network element, the method further comprises:
determining, by the terminal, the first network element.

5. The method according to claim 4, wherein determining, by the terminal, the first network element comprises:
determining, by the terminal, the first network element based on local network element configuration information, wherein the network element configuration information indicates the first network element;
or
sending, by the terminal, an address request to a second network element, wherein the address request is used to request the second network element to determine a user plane address of the first network element; and
receiving, by the terminal, the user plane address of the first network element from the second network element.

6. The method according to claim 5, wherein the address request is sent via a protocol data unit PDU session establishment request.

7. The method according to any one of claims 1 to 6, wherein before sending, by the terminal, the sensing registration request to the first network element, the method further comprises:
sending, by the terminal, a terminal registration request to the access and mobility management function network element, wherein the terminal registration request comprises a sensing capability support indication, and the sensing capability support indication indicates that the terminal is configured to perform sensing, so that the access and mobility management function network element performs authentication and/or authorization on the terminal based on the sensing capability support indication; and
receiving, by the terminal, a terminal registration response from the access and mobility management function network element, wherein the terminal registration response comprises an authentication result of the terminal and/or an authorization result of the terminal.

8. The method according to claim 2, wherein sending, by the terminal, the sensing registration request to the first network element via the access and mobility management function network element comprises:
sending, by the terminal, a terminal registration request to the access and mobility management function network element, wherein the terminal registration request comprises a sensing capability support indication and the sensing registration request, and the sensing capability support indication indicates that the terminal is configured to perform sensing, so that the access and mobility management function network element performs authentication and/or authorization on the terminal based on the sensing capability support indication and sends the sensing registration request to the first network element.

9. The method according to claim 1, wherein when the first network element is an access and mobility management function network element, sending, by the terminal, the sensing registration request to the first network element comprises:
sending, by the terminal, a terminal registration request to the access and mobility management function network element, wherein the terminal registration request comprises a sensing capability support indication and the sensing registration request, and the sensing capability support indication indicates that the terminal is configured to perform sensing, so that the access and mobility management function network element performs authentication and/or authorization on the terminal based on the sensing capability support indication and obtains the sensing registration response in response to the sensing registration request.

10. The method according to any one of claims 1 to 9, wherein the method further comprises:
receiving, by the terminal, a sensing data request from a sensing demander, wherein the sensing demander comprises at least one of the following: the first network element, an application service function network element, or a terminal device;
obtaining, by the terminal, sensing data based on the sensing data request; and
providing, by the terminal, the sensing data for the sensing demander.

11. The method according to any one of claims 1 to 10, wherein the sensing registration request further comprises at least one of the following: sensing quality information of the terminal, a sensing type additionally supported by the terminal, and a channel model parameter of the terminal.

12. A registration method, wherein the method comprises:
receiving, by a first network element, a sensing registration request sent by a terminal, wherein the sensing registration request comprises identity information of the terminal, location information of the terminal, and sensing area information of the terminal; and
sending, by the first network element, a sensing registration response to the sensing registration request to the terminal, wherein the sensing registration response comprises a registration result of the terminal.

13. The method according to claim 12, wherein when the first network element is a sensing network element, the first network element receives the sensing registration request sent by the terminal via an access and mobility management function network element.

14. The method according to claim 13, wherein the sensing registration request is sent by the terminal to the access and mobility management function network element via a first message.

15. The method according to any one of claims 12 to 14, wherein when the first network element is an access and mobility management function network element, receiving, by the first network element, the sensing registration request sent by the terminal comprises:
receiving, by the access and mobility management function network element, a terminal registration request sent by the terminal, wherein the terminal registration request comprises a sensing capability support indication and the sensing registration request, and the sensing capability support indication indicates that the terminal is configured to perform sensing;
performing, by the access and mobility management function network element, authentication and/or authorization on the terminal based on the sensing capability support indication; and
obtaining, by the access and mobility management function network element, the sensing registration response in response to the sensing registration request.

16. The method according to any one of claims 12 to 15, wherein the method further comprises:
sending, by the first network element, a sensing data request to the terminal, to cause the terminal to perform sensing in response to the sensing data request to obtain sensing data; and
receiving, by the first network element, the sensing data from the terminal.

17. The method according to claim 16, wherein the sensing data request is obtained by the first network element from a third network element, an application service function network element, or a terminal device.

18. The method according to any one of claims 12 to 17, wherein the method further comprises:
sending, by the first network element, a sensing update request to a fourth network element, wherein the sensing update request is used to request the fourth network element to update sensing capability information of the first network element; and
receiving, by the first network element, a sensing update response sent by the fourth network element.

19. The method according to any one of claims 12 to 18, wherein the method further comprises:
performing, by the first network element, authentication and/or authorization on the terminal.

20. The method according to claim 19, wherein performing, by the first network element, authentication and/or authorization on the terminal comprises:
locally performing, by the first network element, authentication and/or authorization on the terminal;
or
performing, by the first network element, authentication and/or authorization on the terminal via a fifth network element.

21. The method according to any one of claims 12 to 20, wherein the sensing registration request further comprises at least one of the following: sensing quality information of the terminal, a sensing type additionally supported by the terminal, and a channel model parameter of the terminal.

22. A registration apparatus, comprising a unit configured to perform the method according to any one of claims 1 to 11.

23. A registration apparatus, comprising a unit configured to perform the method according to any one of claims 12 to 21.

24. A communication apparatus, comprising a processor, wherein the processor is coupled to a memory, the memory is configured to store a computer program or instructions, and the processor is configured to execute the computer program or the instructions, to cause the communication apparatus to perform the method according to any one of claims 1 to 21.

25. A computer-readable storage medium, comprising a computer program, wherein when the computer program is run on a computer, the computer is caused to perform the method according to any one of claims 1 to 21.

26. A computer program product, wherein when the computer program product runs on a computer, the computer is caused to perform the method according to any one of claims 1 to 21.

27. A chip system, comprising a processor, configured to invoke a computer program from a memory and run the computer program, to cause a communication device on which the chip system is mounted to perform the method according to any one of claims 1 to 21.

28. A registration system, comprising the apparatus according to claim 22 and the apparatus according to claim 23.
